# EUROPÄISCHE PATENTSCHRIFT

(11) **EP 3 114 154 B1**
(45) Veröffentlichungstag und Bekanntmachung des Hinweises auf die Patenterteilung: **09.08.2017**
(21) Anmeldenummer: 15710457.1
(22) Anmeldetag: 06.03.2015
(51) Int. Cl.: C08G 61/00, C08G 61/02, H01M 4/60, H01M 10/052

(54) **NEUE TETRACYANOANTHRACHINONDIMETHANPOLYMERE UND DEREN VERWENDUNG**
NEW TETRACYANO-ANTHRAQUINO-DIMETHANE POLYMERS AND USE THEREOF
NOUVEAUX POLYMÈRES DE TÉTRACYANOANTHRAQUINONE-DIMÉTHANE ET UTILISATION DESDITS POLYMÈRES

(30) Priorität: 07.03.2014 DE 102014003300
(43) Veröffentlichungstag der Anmeldung: 11.01.2017
(73) Patentinhaber: Evonik Degussa GmbH, 45128 Essen (DE)
(72) Erfinder: HÄUPLER, Bernhard, 91052 Erlangen (DE); SCHUBERT, Ulrich, 07743 Jena (DE); WILD, Andreas, 99423 Weimar (DE)
(86) Internationale Anmeldenummer: PCT/EP2015/054700
(87) Internationale Veröffentlichungsnummer: WO 2015/132374

(56) Entgegenhaltungen:
- US-A- 4 500 459
- US-A1- 2012 035 330

## Beschreibung

Die Erfindung betrifft neue Tetracyanoanthrachinondimethanpolymere und deren Verwendung als aktive Materialien in elektrischen Ladungsspeichern wie Sekundärbatterien. In solchen Sekundärbatterien können die erfindungsgemäßen Polymere beispielsweise als aktives Elektrodenmaterial eingesetzt werden. Diese Sekundärbatterien zeichnen sich insbesondere durch hohe Zellspannungen, große Leistungsdichten sowie lange Lebensdauer sowie einfache und skalierbare Verarbeitungs- und Herstellungsmethoden aus.

Die 11,11,12,12-Tetracyanoanthraquinondimethan (TCAQ) Strukturen dieser neuen Polymere zeigen ein besonderes elektrochemisches Verhalten. Dieses zeichnet sich durch einen reversiblen Zwei-Elektronen-Redoxprozess aus, durch welchen die elektrischen Ladungsspeicher unter anderem ein einstufiges Lade/Entladeplateau aufweisen.

11,11,12,12-Tetracyanoanthraquinondimethanpolymere sind bereits als aktive Komponenten in organischen Elektronikbauteilen bekannt. So werden Copolymere von 11,11,12,12-Tetracyanoanthraquinondimethanderivaten mit Cyclopentadithiophene Einheiten im Polymerrückgrat, synthetisiert über die Stille-Reaktion, als aktives Material in Solarzellen verwendet (CN 103159919 A).

Bekannt ist ebenfalls, Copolymere von 11,11,12,12-Tetracyanoanthraquinondimethanderivaten mit Triarylamineinheiten im Polymerrückgrat, synthetisiert über Heck-Reaktion, als aktives Material in Solarzellen, Elektroluminiszenzbauteilen und Feldeffekttransistoren einzusetzen (CN 102796245 A).

Copolymere von 11,11,12,12-Tetracyanoanthraquinondimethanderivaten mit Metallocen Einheiten im Polymerrückgrat, synthetisiert über Aza-Wittig-Reaktion, werden als polymere Magnete verwendet (US 2012/0035330 A1, CA 26995856 A1).

Bekannte Polymere mit 11,11,12,12-Tetracyanoanthraquinondimethaneinheiten sind ausschließlich Polymere, bei denen die 11,11,12,12-Tetracyanoanthraquinondimethaneinheit im Polymerrückgrat lokalisiert ist. Eine typische Struktur dieser Polymere wird durch die folgende schematische Darstellung repräsentiert.

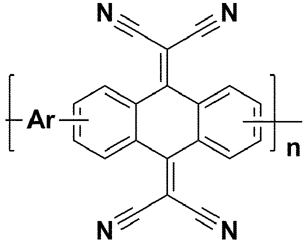

Dabei stellt Ar eine bivalente aromatische Gruppe da und n ist eine ganze Zahl, welche die Anzahl an Wiederholeinheiten angibt und dadurch die Länge des Polymers bestimmt.

Die vorgenannten 11,11,12,12-Tetracyanoanthraquinondimethanpolymere sind aufwändig herzustellen. Für die Synthese dieser Polymere sind zwei Monomere bzw. die Synthese eines bifunktionellen Monomers nötig. Die Herstellung solcher Monomere umfasst eine mehrstufige Synthese. Im Allgemeinen wird die Polymerisation durch Palladium katalysierte Kreuzkupplungen (Stille- Reaktion, Heck-Reaktion, Suzuki-Reaktion) durchgeführt, weshalb die Monomereinheiten dafür geeignete Strukturen, wie Boronsäuren bzw. deren Ester, Doppelbindungen oder organische Zinnverbindungen, besitzen müssen. Das erhaltene Copolymer ist dabei oft nicht mehr löslich und deshalb nur mit Schwierigkeiten zu verarbeiten. Außerdem ist der Molmassenverteilungsgrad bei diesen Polymerisationsmethoden hoch und die Molmasse sowie die Ausbeute zumeist niedrig. Ferner sind in diesen bekannten Verfahren zum größten Teil nur konjugierte Copolymere herstellbar.

Bei einer Verwendung in elektrischen Ladungsspeichern würden diese Polymere durch die hohe Molmasse ihrer Wiederholeinheit ein geringes Masse-zu-Ladung-Verhältnis und daher eine für praktische Anwendungen zu niedrige theoretische Kapazität aufweisen. Auf Grund der durchgehenden Konjugation im Polymerrückgrad verändert sich das Redoxpotential, wodurch der elektrische Ladungsspeicher auch kein stabiles Lade-/Entladeplateau aufweisen würde.
Über Anwendung dieser 11,11,12,12-Tetracyanoanthraquinondimethanpolymere für elektrische Ladungsspeicher ist deshalb in der Fachwelt auch nichts bekannt geworden.

Organische Radikalbatterien sind elektrochemische Zellen, die ein organisches Ladungsspeicherungsmaterial als aktives Elektrodenmaterial zur Speicherung von elektrischer Ladung verwenden. Diese Sekundärbatterien zeichnen sich durch ihre besonderen Eigenschaften, wie Schnellladefähigkeit, hohe Lebensdauer, geringes Gewicht und hohe Flexibilität sowie einfache Verarbeitbarkeit, aus.

Einige polymere Strukturen mit anderen redoxaktiven Einheiten als die vorgenannten 11,11,12,12-Tetracyanoanthraquinondimethanpolymere sind hingegen als aktive Elektrodenmaterialien zur Ladungsspeicherung bereits bekannt (beispielsweise zeigen die WO 2012/133202 A1, WO 2012/133204 A1, WO 2012/120929 A1, WO 2012/153866 A1, WO 2012/153865 A1, JP 2012-221574 A, JP 2012-221575 A, JP 2012-219109 A, JP 2012-079639 A, WO 2012/029556 A1, WO 2012/153865 A1, JP 2011-252106 A, JP 2011-074317 A, JP 2011-165433 A, WO 2011/034117 A1, WO 2010/140512 A1, WO 2010/104002 A1, JP 2010-238403 A, JP 2010-163551 A, JP 2010-114042 A, WO 2010/002002 A1, WO 2009/038125 A1, JP 2009-298873 A, WO 2004/077593 A1, WO 2009/145225 A1, JP 2009-238612 A, JP 2009-230951 A, JP 2009-205918 A, JP 2008-234909 A, JP 2008-218326 A, WO 2008/099557 A1, WO 2007/141913 A1, US 2002/0041995 A1, US 2002/0041995 A1, JP 2002-117852 A, EP 1 128 453 A2, polymere Verbindungen mit organischen Nitroxidradikalen als aktive Einheiten zur Ladungsspeicherung); US 2002/0041995, JP 2002-117852 A zeigen als Beispiel polymere Verbindungen mit organischen Phenoxylradikalen oder Galvinoxylradikalen).

Auch polymere Verbindungen mit Chinonen (beispielsweise JP 2009-217992 A, WO 2013/099567, WO 2011/068217 A1), mit Dionen (wie JP 2010-212152 A), sowie mit Dicyanodiiminen (beispielsweise JP 2012-190545 A, JP 2010-55923 A) als aktive Einheiten zur Ladungsspeicherungen sind bekannt.
Wie beschrieben, finden die der Fachwelt bekannten 11,11,12,12-Tetracyanoanthrachinondimethanpolymere aus den vorgenannten Gründen für Energiespeicher bislang keine Verwendung.

Die theoretische Kapazität der bereits bekannten Polymere mit redoxaktiven Substituenten ist durch zwei Faktoren streng limitiert: einerseits durch die molare Masse der Monomereinheit und andererseits durch die Anzahl an Elektronen, die an der Redoxreaktion der elektrischen Ladungsspeicherung beteiligt sind. Die meisten organischen redoxaktiven Einheiten verfügen nur über einen Ein-Elektronenprozess, welcher zur Ladungsspeicherung verwendet wird, und weisen deshalb, wie oben angemerkt, auf Grund ihrer vergleichsweise hohen Molmasse eine niedrige theoretische Kapazität auf.

Durch die Verwendung von Mehrelektronredoxprozessen, wie dies z. B. bei Chinonen oder Dicyanodiimiden der Fall ist, erhöht sich die theoretische Kapazität des Materials, jedoch sind diese Mehrelektronenprozesse abhängig von einander, so dass die Redoxreaktionen bei unterschiedlichen Potentialen stattfinden und somit mehrere unerwünschte Lade-/Entladeplateaus bei unterschiedlichen Zellspannungen im jeweiligen elektrischen Ladungsspeicher entstehen.

Der Erfindung liegt deshalb die Aufgabe zugrunde, neue Polymere zu schaffen, die mit geringem Aufwand herstellbar sind, wobei deren chemisch-physikalischen Eigenschaften bei der Synthese in weiten Grenzen gezielt beeinflusst werden können, und welche als aktive Materialien in elektrischen Ladungsspeichern für hohe Speicherkapazität, lange Lebensdauer und ein flaches Lade-/Entladeplateau verwendet werden können.

Es wurden neue Tetracyanoanthrachinondimethanpolymere, bestehend aus einer oligomeren oder polymeren Verbindung der allgemeinen Formel I gefunden: 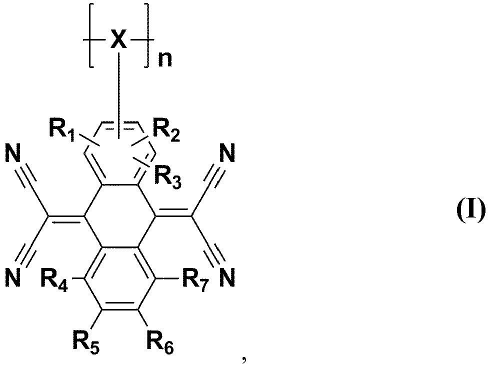 wobei
- R₁ bis R₇:: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei Wasserstoffatome als mindestens fünf der Substituenten R₁ bis R₇ und Nicht-Wasserstoffatome, vorzugsweise Halogenatome, Alkylgruppen, Alkoxygruppen, Cyanogruppen und/oder Nitrogruppen, als null bis zwei der Substituenten R₁ bis R₇ besonders bevorzugt sind,
- X:: eine organische Gruppe ist, welche durch Polymerisationreaktion aus einer Gruppe gebildet wird, die aus einer organischen Doppelbindung, einer organischen Dreifachbindung, eines Oxirans oder eines Aziridins besteht, oder eine organische Gruppe ist, welche durch eine polymeranaloge Reaktion gebildet wird,
- n:: eine Ganzzahl größer gleich 2 ist.

Die organische Gruppe X kann dabei vorzugsweise eine Struktur der nachstehenden Formeln II - XIV aufweisen: 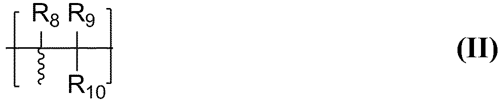 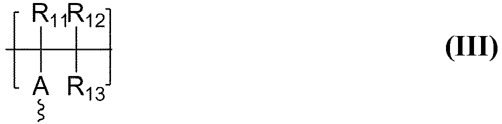 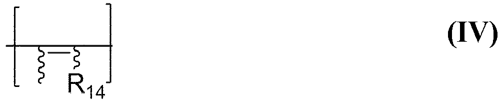 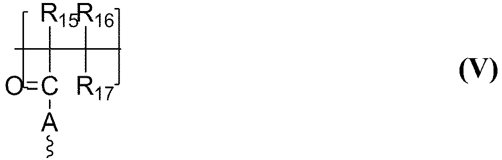 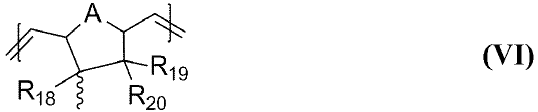 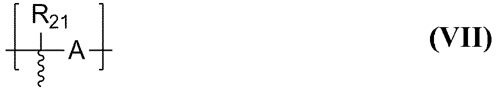 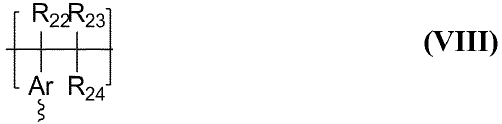 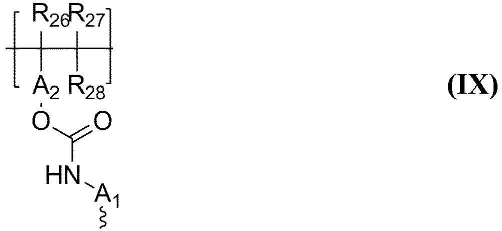 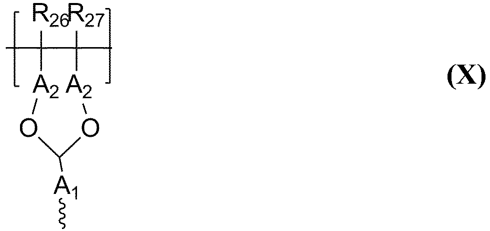 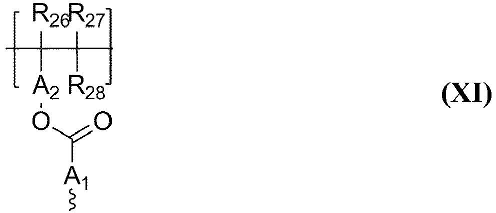 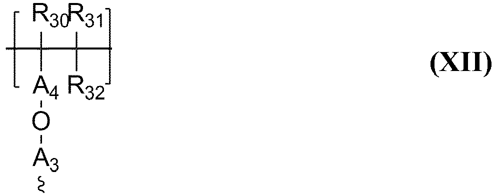 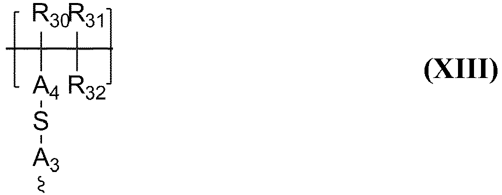 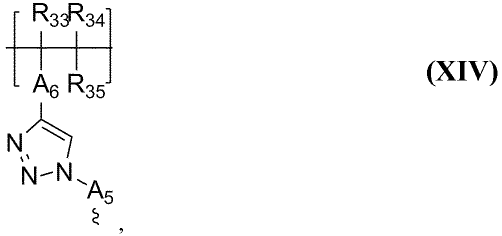 wobei
- R₈ bis R₂₄:: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei
Wasserstoffatome als mindestens zwei der Substituenten R₈ bis R₁₀ und Nicht-Wasserstoffatome, vorzugsweise Halogenatome, Alkylgruppen, Alkoxygruppen, Cyanogruppen und/oder Nitrogruppen, als null bis zwei der Substituenten R₈ bis R₁₀ und/oder
Wasserstoffatome als mindestens zwei der Substituenten R₁₁ bis R₁₃ und Nicht-Wasserstoffatome, vorzugsweise Halogenatome, Alkylgruppen, Alkoxygruppen, Cyanogruppen und/oder Nitrogruppen, als null bis einem der Substituenten R₁₁ bis R₁₃ und/oder
ein Wasserstoffatom als R₁₄, und/oder
Wasserstoffatome als mindestens zwei der Substituenten R₁₅ bis R₁₇ und Nicht-Wasserstoffatome, vorzugsweise Halogenatome, Alkylgruppen, Alkoxygruppen, Cyanogruppen und/oder Nitrogruppen, als null bis einem der Substituenten R₁₅ bis R₁₇, und/oder
Wasserstoffatome als mindestens zwei der Substituenten R₁₈ bis R₂₀ und Nicht-Wasserstoffatome, vorzugsweise Halogenatome, Alkylgruppen, Alkoxygruppen, Cyanogruppen und/oder Nitrogruppen, als null bis einem der Substituenten R₁₈ bis R₂₀ und/oder
ein Wasserstoffatom als R₂₁ und/oder
Wasserstoffatome als mindestens zwei der Substituenten R₂₂ bis R₂₄ und Nicht-Wasserstoffatome, vorzugsweise Halogenatome, Alkylgruppen,
- R₂₆ bis R₂₈:: Alkoxygruppen, Cyanogruppen und/oder Nitrogruppen, als null bis einem der Substituenten R₂₂ bis R₂₄
besonders bevorzugt sind,
unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei Wasserstoffatome als mindestens zwei der Substituenten R₂₆ bis R₂₈ und Nicht-Wasserstoffatome, vorzugsweise Halogenatome, Alkylgruppen, Alkoxygruppen, Cyanogruppen und/oder Nitrogruppen, als null bis einem der Substituenten R₂₆ bis R₂₈ besonders bevorzugt sind,
- R₃₀ bis R₃₂:: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Halogenatome oder eine Kombination dieser Gruppen oder Atome darstellen können, wobei Wasserstoffatome als mindestens zwei der Substituenten R₃₀ bis R₃₂, und Nicht-Wasserstoffatome, vorzugsweise Halogenatome, Alkylgruppen, Alkoxygruppen, Cyanogruppen und/oder Nitrogruppen, als null bis einem der Substituenten R₃₀ bis R₃₂ besonders bevorzugt sind,
- R₃₃ bis R₃₅:: unabhängig voneinander bevorzugt Wasserstoffatome, Alkylgruppen, Alkenylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können wobei Wasserstoffatome als mindestens zwei der Substituenten R₃₃ bis R₃₅ und Nicht-Wasserstoffatome, vorzugsweise Halogenatome, Alkylgruppen, Alkoxygruppen, Cyanogruppen und/oder Nitrogruppen, als null bis einem der Substituenten R₃₃ bis R₃₅ besonders bevorzugt sind,
- A:: ein Sauerstoffatom, ein Schwefelatom oder eine -N(R₂₉)- Gruppe ist, wobei R₂₉ bevorzugt ein Wasserstoffatom, Alkylgruppe, Alkenylgruppe, Alkinylgruppe, Alkoxygruppe, Alkylthiogruppe, Haloalkylgruppe, Haloalkoxygruppe, Cycloalkylgruppe, Cycloalkoxygruppe, Arylgruppe, Heteroarylgruppe, Aryloxygruppe, Aralkylgruppe, Carbonsäuregruppe, Sulfonsäuregruppe, Nitrogruppe, Alkylcarbonylgruppe, Alkenylcarbonylgruppe, Alkinylcarbonylgruppe, Carbonsäureestergruppe, Carbonsäureamidgruppe, Sulfonsäureestergruppe ist, wobei ein Sauerstoffatom als A besonders bevorzugt ist,
- A₁ und A₂:: unabhängig voneinander bevorzugt eine kovalente Bindung, eine Alkylgruppe, eine Alkenylgruppe, eine Alkinylgruppe, eine Alkoxygruppe, eine Alkylthiogruppe, eine Haloalkylgruppe, eine Haloalkoxygruppe, eine Cycloalkylgruppe, eine Cycloalkoxygruppe, eine Arylgruppe, eine Heteroarylgruppe, eine Aryloxygruppe, eine Aralkylgruppe, eine Monoalkylaminogruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sind, wobei eine kovalente Bindung oder eine Alkylgruppe als A₁ und A₂ besonders bevorzugt ist,
- A₃ und A₄:: unabhängig voneinander bevorzugt eine kovalente Bindung, eine Alkylgruppe, eine Alkenylgruppe, eine Alkinylgruppe, eine Alkoxygruppe, eine Alkylthiogruppe, eine Cycloalkylgruppe, eine Cycloalkoxygruppe, eine Arylgruppe, eine Heteroarylgruppe, eine Aryloxygruppe, eine Aralkylgruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sein können, wobei eine kovalente Bindung oder eine Alkylgruppe als A₁ und A₂ besonders bevorzugt ist,
- A₅ und A₆:: unabhängig voneinander bevorzugt eine kovalente Bindung, eine Alkylgruppe, eine Alkenylgruppe, eine Alkoxygruppe, eine Alkylthiogruppe, eine Haloalkylgruppe, eine Haloalkoxygruppe, eine Cycloalkylgruppe, eine Cycloalkoxygruppe, eine Arylgruppe, eine Heteroarylgruppe, eine Aryloxygruppe, eine Aralkylgruppe, eine Monoalkylaminogruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sein können, wobei eine kovalente Bindung, eine Arylgruppe oder eine Alkylgruppe als A₅ und A₆ besonders bevorzugt ist,
- Ar:: einer unabhängig voneinander substituierten Cycloalkylgruppe, Cycloalkoxygruppe, Arylgruppe, Heteroarylgruppe, Aryloxygruppe, Aralkylgruppe entspricht.

Es wurden neue Polymere synthetisiert, welche 11,11,12,12-Tetracyanoanthraquinondimethaneinheiten als anhängende Gruppe am Polymerrückgrat enthalten. Diese Polymere weisen hervorragende Eigenschaften, insbesondere als redoxaktives Elektrodenmaterial in Anoden oder Kathoden für sekundäre elektrische Ladungsspeicher, auf. In den Unteransprüchen sind vorteilhafte Verwendungsmöglichkeiten der erfindungsgemäßen Tetracyanoanthrachinondimethanpolymere genannt.

Diese neuen Polymere können auf einfache und aufwandgeringe Weise sowie aus gut zugänglichen Startmaterialien hergestellt werden. Zur Polymerisation ist kein weiteres Monomer nötig und die Polymerisation benötigt keine teuren Metallkatalysatoren, sondern als Herstellungsmethode können einfache Polymerisationsverfahren verwendet werden. Dabei können Polymere mit hoher Molmasse und geringem Polydispersitätsindex in sehr hohen Ausbeuten erhalten werden. Durch die Einführung von polymerisierbaren Gruppen mit geringer Molmasse kann die Monomermolmasse niedrig gehalten und die theoretische Kapazität des sekundären elektrischen Ladungsspeichers maximiert werden. Ferner stehen in diesen Polymeren die redoxaktiven Gruppen nicht in Konjugation miteinander; als Konsequenz weist der elektrische Ladungsspeicher ein flaches Lade-/Entladeplateau auf. Diese Materialien unterscheiden sich vom Stand der Technik durch eine Zwei-Elektroden-Redoxreaktion, welche zu dem besagten flachen Lade-/Entladeplateau bei gleichzeitiger hoher Kapazität und hoher Lebensdauer im Bauteil führt.

In der folgenden Beschreibung definiert sich n als normal, i als iso, s als sekundär, t als tertiär, c als cyclo, m als meta, p als para und o als ortho.
In dieser Spezifikation kann eine Alkylgruppe sowohl verzweigt als auch unverzweigt sein. Eine Alkylgruppe besteht typischerweise aus einem bis zu dreißig Kohlenstoffatomen, bevorzugt aus einem bis zu zwanzig Kohlenstoffatomen. Beispiele für eine Alkylgruppe sind: Methylgruppe, Ethylgruppe, Propylgruppe, Isopropylgruppe, n-Butylgruppe, sec-Butylgruppe, t-Butylgruppe, Pentylgruppe, n-Hexylgruppe, n-Heptylgruppe, 2-Ethylhexylgruppe, n-Octylgruppe, n-Nonylgruppe, n-Decylgruppe, n-Undecylgruppe, n-Dodecylgruppe, n-Tridecylgruppe, n-Tetradecylgruppe, n-Pentadecylgruppe, n-Hexadecylgruppe, n-Heptadecylgruppe, n-Octadecylgruppe, n-Nonadecylgruppe oder Eicosylgruppe. Besonders bevorzugt sind Alkylgruppen mit einem bis sechs Kohlenstoffatomen.

In dieser Spezifikation kann eine Alkenylgruppe sowohl verzweigt als auch unverzweigt sein. Eine Alkenylgruppe besteht typischerweise aus einem bis zu dreißig Kohlenstoffatomen, bevorzugt aus einem bis zwanzig Kohlenstoffatomen. Alkenylgruppen besitzen typischerweise eine ungesättigte ethenylsiche Doppelbindung, der restliche Anteil der Alkenylgruppe ist gesättigt. Zwei oder mehrere ethenylische ungesättigte Doppelbindungen sind möglich, aber nicht bevorzugt. Besonders bevorzugt ist die ungesättigte ethenylische Doppelbindung an der alpha Position der Alkenylgruppe.

Beispiele für eine Alkenylgruppe sind: Vinylgruppe, Allylgruppe, Propenylgruppe, Isopropenylgruppe, n-Butenylgruppe, sec.-Butenylgruppe, Pentenylgruppe, n-Hexenylgruppe, n-Heptenylgruppe, 2-Ethylhexenylgruppe, n-Octenylgruppe, n-Nonenylgruppe, n-Decenylgruppe, n-Undecenylgruppe, n-Dodecenylgruppe, n-Tridecenylgruppe, n-Tetradecenylgruppe, n-Pentadecenylgruppe, n-Hexadecenylgruppe, n-Heptadecenylgruppe, n-Octadecenylgruppe, n-Nonadecenylgruppe oder Eicosenylgruppe. Bevorzugt sind Alkenylgruppen mit zwei bis drei Kohlenstoffatomen; besonderes bevorzugt sind Vinylgruppen und Allylgruppen.

In dieser Spezifikation kann eine Alkinylgruppe sowohl verzweigt als auch unverzweigt sein. Eine Alkinylgruppe besteht typischerweise aus zwei bis zu dreißig Kohlenstoffatomen, bevorzugt aus einem bis zwanzig Kohlenstoffatomen. Alkinylgruppen besitzen typischerweise eine ungesättigte ethinylische Dreifachbindung, der restliche Anteil der Alkinylgruppe ist gesättigt. Zwei oder mehrere ethinylische ungesättigte Dreifachbindungen sind möglich, aber nicht bevorzugt. Besonders bevorzugt ist die ungesättigte ethinylische Doppelbindung an der alpha-Position der Alkinylgruppe. Beispiele für eine Alkinylgruppe sind: Ethinylgruppe, Propinylgruppe, Butinylgruppe, Pentinylgruppe, n-Hexinylgruppe, n-Heptinylgruppe, 2-Ethylhexinylgruppe, n-Octyinlgruppe, n-Noninylgruppe, n-Decinylgruppe, n-Undecinylgruppe, n-Dodecinylgruppe, n-Tridecinylgruppe, n-Tetradecinylgruppe, n-Pentadecinylgruppe, n-Hexadecinylgruppe, n-Heptadecinylgruppe, n-Octadecinylgruppe, n-Nonadecinylgruppe oder Eicosinylgruppe. Bevorzugt sind Alkinylgruppen mit zwei Kohlenstoffatomen.

In dieser Spezifikation kann eine Alkylthiogruppe sowohl verzweigt als auch unverzweigt sein. Eine Alkylthiogruppe besteht typischerweise aus einem bis zu dreißig Kohlenstoffatomen und einem oder mehreren Schwefelatomen, die kovalent an zwei Kohlenstoffatomen der Kette gebunden sind, bevorzugt aus einem bis zwanzig Kohlenstoffatomen und einem Schwefelatom. Beispiele für eine Alkylthiogruppe sind: Methylthiogruppe, Ethylthiogruppe, n-Propylthiogruppe, i-Propylthiogruppe, n-Butylthiogruppe, s-Butylthiogruppe, t-Butylthiogruppe, n-Pentylthiogruppe, 1-Methylbutylthiogruppe, 2-Methylbutylthiogruppe, 3-Methylbutylthiogruppe, 1,1-Dimethylpropylthiogruppe, 2,2-Dimethylpropylthiogruppe, n-Hexylthiogruppe, 1-Methylpentylthiogruppe, 2-Methylpentylthiogruppe, 1,1-Dimethylbutylthiogruppe, 1-Ethylbutylthiogruppe, 1,1,2-Trimethylpropylthiogruppe, n-Heptylthiogruppe, n-Octylthiogruppe, 2-Ethylhexylthiogruppe, n-Nonylthiogruppe, n-Decylthiogruppe, n-Dodecylthiogruppe.

In dieser Spezifikation kann eine Monoalkylaminogruppe sowohl verzweigt als auch unverzweigt sein. Eine Monoalkylaminogruppe besteht typischerweise aus einem bis zu dreißig Kohlenstoffatomen und einem oder mehreren Stickstoffatomen, die kovalent an zwei Kohlenstoffatomen der Kette gebunden sind, bevorzugt aus einem bis zwanzig Kohlenstoffatomen und einem Stickstoffatom. Beispiele für eine Monoalkylaminogruppe sind: Methylaminogruppe, Ethylaminogruppe, n-Propylaminogruppe, i-Propylaminogruppe, c-Propylaminogruppe, n-Butylaminogruppe, i-Butylaminogruppe, s-Butylaminogruppe, t-Butylaminogruppe, c-Butylaminogruppe, 1-Methyl-c-propylaminogruppe, 2-Methyl-c-propylaminogruppe, n-Pentylaminogruppe, 1-Methyl-n-butylaminogruppe, 2-Methyl-n-butylaminogruppe, 3-Methyl-n-butylaminogruppe, 1,1-Dimethyl-n-propylaminogruppe, 1,2-Dimethyl-n-propylaminogruppe, 2,2-Dimethyl-n-propylaminogruppe, 1-Ethyl-n-propylaminogruppe, c-Pentylaminogruppe, 1-Methyl-c-butylaminogruppe, 2-Methyl-c-butylaminogruppe, 3-Methyl-c-butylaminogruppe, 1,2-Dimethyl-c-propylaminogruppe, 2,3-Dimethyl-c-propylaminogruppe, 1-Ethyl-c-propylaminogruppe, 2-Ethyl-c-propylaminogruppe, n-Hexylaminogruppe, 1-Methyl-n-pentylaminogruppe, 2-Methyl-n-pentylaminogruppe, 3-Methyl-n-pentylaminogruppe, 4-Methyl-n-pentylaminogruppe, 1,1-Dimethyl-n-butylaminogruppe, 1,2-Dimethyl-n-butylaminogruppe, 1,3-Dimethyl-n-butylaminogruppe, 2,2-Dimethyl-n-butylaminogruppe, 2,3-Dimethyl-n-butylaminogruppe, 3,3-Dimethyl-n-butylaminogruppe, 1-Ethyl-n-butylaminogruppe, 2-Ethyl-n-butylaminogruppe, 1,1,2-Trimethyl-n-propylaminogruppe, 1,2,2-Trimethyl-n-propylaminogruppe, 1-Ethyl-1-methyl-n-propylaminogruppe, 1-Ethyl-2-methyl-n-propylaminogruppe, c-Hexylaminogruppe, 1-Methyl-c-pentylaminogruppe, 2-Methyl-c-pentylaminogruppe, 3-Methyl-c-pentylaminogruppe, 1-Ethyl-c-butylaminogruppe, 2-Ethyl-c-butylaminogruppe, 3-Ethyl-c-butylaminogruppe, 1,2-Dimethyl-c-butylaminogruppe, 1,3-Dimethyl-c-butylaminogruppe, 2,2-Dimethyl-c-butylaminogruppe, 2,3-Dimethyl-c-butylaminogruppe, 2,4-Dimethyl-c-butylaminogruppe, 3,3-Dimethyl-c-butylaminogruppe, 1-n-Propyl-c-propylaminogruppe, 2-n-Propyl-c-Propylaminogruppe, 1-i-Propyl-c-Propylaminogruppe, 2-i-Propyl-c-propylaminogruppe, 1,2,2-Trimethyl-c-propylaminogruppe, 1,2,3-Trimethyl-c-propylaminogruppe, 2,2,3-Trimethyl-c-propylaminogruppe, 1-Ethyl-2-methyl-c-propylaminogruppe, 2-Ethyl-1-methyl-c-propylaminogruppe, 2-Ethyl-2-methyl-c-propylaminogruppe, 2-Ethyl-3-methyl-c-propylaminogruppe.

In dieser Spezifikation kann eine Dialkylaminogruppe sowohl verzweigt als auch unverzweigt sein. Eine Dialkylaminogruppe besteht typischerweise aus einem bis zu dreißig Kohlenstoffatomen und einem oder mehreren Stickstoffatomen, die kovalent an drei Kohlenstoffatomen der Kette gebunden sind, bevorzugt aus einem bis zwanzig Kohlenstoffatomen und einem Stickstoffatom. Beispiele für eine Dialkylaminogruppe sind: Di-i-propylaminogruppe, Di-c-propylaminogruppe, Di-n-butylaminogruppe, Di-i-butylaminogruppe, Di-s-butylaminogruppe, Di-t-butylaminogruppe, Di-c-butylaminogruppe, Di-(1-methyl-c-propyl)aminogruppe, Di-(2-methyl-c-propyl)aminogruppe, Di-n-pentylaminogruppe, Di-(1-methyl-n-butyl)aminogruppe, Di-(2-methyl-n-butyl)aminogruppe, Di-(3-methyl-n-butyl)aminogruppe, Di-(1,1-dimethyl-n-propyl)aminogruppe, Di-(1,2-dimethyl-n-propyl)aminogruppe, Di-(2,2-dimethyl-n-propyl)aminogruppe, Di-(1-ethyl-n-propyl)aminogruppe, Di-c-pentylaminogruppe, Di-(1-methyl-c-butyl)aminogruppe, Di-(2-methyl-c-butyl)aminogruppe, Di-(3-methyl-c-butyl)aminogruppe, Di-(1,2-dimethyl-c-propyl)aminogruppe, Di-(2,3-dimethyl-c-propyl)aminogruppe, Di-(1-ethyl-c-propyl) aminogruppe, Di-(2-ethyl-c-propyl)aminogruppe, Di-n-hexylaminogruppe, Di-(1-methyl-n-pentyl)aminogruppe, Di-(2-methyl-n-pentyl)aminogruppe, Di-(3-methyl-n-pentyl)amino gruppe, Di-(4-methyl-n-pentyl)aminogruppe, Di-(1,1-dimethyl-n-butyl)aminogruppe, Di-(1,2-dimethyl-n-butyl)aminogruppe, Di-(1,3-dimethyl-n-butyl)aminogruppe.

In dieser Spezifikation kann eine Haloalkylgruppe sowohl verzweigt als auch unverzweigt sein. Eine Haloalkylgruppe besteht typischerweise aus einem bis zu dreißig Kohlenstoffatomen, die wiederum unabhängig voneinander mit einem oder mehreren Halogenatomen substituiert sein können, bevorzugt aus einem bis zwanzig Kohlenstoffatomen. Beispiele für Halogenatome sind Fluoratom, Chloratom, Bromatom und Iodatom. Bevorzugt sind das Fluoratom und das Chloratom. Beispiele für eine Haloalkylgruppe sind: Difluoromethoxygruppe, Trifluoromethoxygruppe, Bromodifluoromethoxygruppe, 2-Chloroethoxygruppe, 2-Bromoethoxygruppe, 1,1-Difluoroethoxygruppe, 2,2,2-Trifluoroethoxygruppe, 1,1,2,2-Tetrafluoroethoxygruppe, 2-Chloro-1,1,2-trifluoroethoxygruppe, Pentafluoroethoxygruppe, 3-Bromopropoxygruppe, 2,2,3,3-Tetrafluoropropoxygruppe, 1,1,2,3,3,3-Hexafluoropropoxygruppe, 1,1,1,3,3,3-Hexafluoropropoxygruppe, 3-Bromo-2-methylpropoxygruppe, 4-Bromobutoxygruppe, Perfluoropentyloxygruppe.

In dieser Spezifikation kann eine Haloalkoxygruppe sowohl verzweigt als auch unverzweigt sein. Eine Haloalkoxygruppe besteht typischerweise aus einem Sauerstoffatom, an dem eine Kette, bestehend aus einem bis zu dreißig Kohlenstoffatomen, kovalent gebunden ist und die sowohl verzweigt, als auch unverzweigt sein kann sowie deren Kohlenstoffatome wiederum unabhängig voneinander mit einem oder mehreren Halogenatomen substituiert sein können. Bevorzugt besteht diese Kette aus einem bis zwanzig Kohlenstoffatomen. Beispiele für Halogenatome sind Fluoratom, Chloratom, Bromatom und Iodatom. Bevorzugt sind das Fluoratom und das Chloratom. Beispiele für eine Haloalkoxylgruppe sind: Difluoromethoxylgruppe, Trifluoromethoxylgruppe, Bromodifluoromethoxylgruppe, 2-Chloroethoxylgruppe, 2-Bromoethoxylgruppe, 1,1-Difluoroethoxylgruppe, 2,2,2-Trifluoroethoxylgruppe, 1,1,2,2-Tetrafluoroethoxylgruppe, 2-Chloro-1,1,2-trifluoroethoxylgruppe, Pentafluoroethoxylgruppe, 3-Bromopropoxylgruppe, 2,2,3,3-Tetrafluoropropoxylgruppe, 1,1,2,3,3,3-Hexafluoropropoxylgruppe, 1,1,1,3,3,3-Hexafluoropropoxylgruppe, 3-Bromo-2-methylpropoxylgruppe, 4-Bromobutoxylgruppe, Perfluoropentoxylgruppe.

Eine Alkylcarbonylgruppe besteht in dieser Spezifikation typischerweise aus einem Karbonylkohlenstoff, an dem eine Alkylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für eine Alkylkarbonylgruppe sind: Methylcarbonylgruppe, Ethylcarbonylgruppe, n-Propylcarbonylgruppe, i-Propylcarbonylgruppe, c-Propylcarbonylgruppe, n-Butylcarbonylgruppe, i-Butylcarbonylgruppe, s-Butylcarbonylgruppe, t-Butylcarbonylgruppe, c-Butylcarbonylgruppe, 1-Methyl-c-propylcarbonylgruppe, 2-Methyl-c-propylcarbonylgruppe, n-Pentylcarbonylgruppe, 1-Methyl-n-butylcarbonylgruppe, 2-Methyl-n-butylcarbonylgruppe, 3-Methyl-n-butylcarbonylgruppe, 1,1-Dimethyl-n-propylcarbonylgruppe, 1,2-Dimethyl-n-propylcarbonylgruppe, 2,2-Dimethyl-n-propylcarbonylgruppe, 1-Ethyl-n-propylcarbonylgruppe, c-Pentylcarbonylgruppe, 1-Methyl-c-butylcarbonylgruppe, 2-Methyl-c-butylcarbonylgruppe, 3-Methyl-c-butylcarbonylgruppe, 1,2-Dimethyl-c-propylcarbonylgruppe, 2,3-Dimethyl-c-propylcarbonylgruppe, 1-Ethyl-c-propylcarbonylgruppe, 2-Ethyl-c-propylcarbonylgruppe, n-Hexylcarbonylgruppe. 1-Methyl-n-pentylcarbonylgruppe, 2-Methyl-n-pentylcarbonylgruppe, 3-Methyl-n-pentylcarbonylgruppe, 4-Methyl-n-pentylcarbonylgruppe, 1,1-Dimethyl-n-butylcarbonylgruppe, 1,2-Dimethyl-n-butylcarbonylgruppe, 1,3-Dimethyl-n-butylcarbonylgruppe, 2,2-Dimethyl-n-butylcarbonylgruppe, 2,3-Dimethyl-n-butylcarbonylgruppe, 3,3-Dimethyl-n-butylcarbonylgruppe, 1-Ethyl-n-butylcarbonylgruppe, 2-Ethyl-n-butylcarbonylgruppe.

Eine Alkenylcarbonylgruppe in dieser Spezifikation besteht typischerweise aus einem Karbonylkohlenstoff, an dem eine Alkenylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für eine Alkenylkarbonylgruppe sind: Ethenylcarbonylgruppe, 1-Propenylcarbonylgruppe, 2-Propenylcarbonylgruppe, 1-Methyl-1-ethenylcarbonylgruppe, 1-Butenylcarbonylgruppe, 2-Butenylcarbonylgruppe, 3-Butenylcarbonylgruppe, 2-Methyl-1-propenylcarbonylgruppe, 2-Methyl-2-propenylcarbonylgruppe, 1-Ethylethenylcarbonylgruppe, 1-Methyl-1-propenylcarbonylgruppe, 1-Methyl-2-propenylcarbonylgruppe, 1-Pentenylcarbonylgruppe, 2-Pentenylcarbonylgruppe, 3-Pentenylcarbonylgruppe, 4-Pentenylcarbonylgruppe, 1-n-Propylethenylcarbonylgruppe, 1-Methyl-1-butenylcarbonylgruppe, 1-Methyl-2-butenylcarbonylgruppe, 1-Methyl-3-butenylcarbonylgruppe, 2-Ethyl-2-propenylcarbonylgruppe, 2-Methyl-1-butenylcarbonylgruppe, 2-Methyl-2-butenylcarbonylgruppe, 2-Methyl-3-butenylcarbonylgruppe, 3-Methyl-1-butenylcarbonylgruppe, 3-Methyl-2-butenylcarbonylgruppe, 3-Methyl-3-butenylcarbonylgruppe, 1,1-Dimethyl-2-propenylcarbonylgruppe, 1-i-Propylethenylcarbonylgruppe, 1,2-Dimethyl-1-propenylcarbonylgruppe, 1,2-Dimethyl-2-propenylcarbonylgruppe, 1-c-Pentenylcarbonylgruppe, 2-c-Pentenylcarbonylgruppe, 3-c-Pentenylcarbonylgruppe, 1-Hexenylcarbonylgruppe, 2-Hexenylcarbonylgruppe, 3-Hexenylcarbonylgruppe, 4-Hexenylcarbonylgruppe, 5-Hexenylcarbonylgruppe, 1-Methyl-1-pentenylcarbonylgruppe, 1-Methyl-2-pentenylcarbonylgruppe, 1-Methyl-3-pentenylcarbonylgruppe, 1-Methyl-4-Pentenylcarbonylgruppe, 1-n-Butylethenylcarbonylgruppe, 2-Methyl-1-pentenylcarbonylgruppe, 2-Methyl-2-pentenylcarbonylgruppe, 2-Methyl-3-pentenylcarbonylgruppe, 2-Methyl-4-pentenylcarbonylgruppe, 2-n-Propyl-2-propenylcarbonylgruppe, 3-Methyl-1-pentenylcarbonylgruppe, 3-Methyl-2-pentenylcarbonylgruppe.

Eine Alkinylcarbonylgruppe besteht in dieser Spezifikation typischerweise aus einem Karbonylkohlenstoff, an dem eine Alkinylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für eine Alkinylkarbonylgruppe sind: Ethinylcarbonylgruppe, 1-Propinylcarbonylgruppe, 2-Propinylcarbonylgruppe, 1-Butinylcarbonylgruppe, 2-Butinylcarbonylgruppe, 3-Butinylcarbonylgruppe, 1-Methyl-2-propinylcarbonylgruppe, 1-Pentinylcarbonylgruppe, 2-Pentinylcarbonylgruppe, 3-Pentinylcarbonylgruppe, 4-Pentinylcarbonylgruppe, 1-Methyl-2-butinylcarbonylgruppe, 1-Methyl-3-butinylcarbonylgruppe, 2-Methyl-3-butinylcarbonylgruppe, 3-Methyl-1-Butinylcarbonylgruppe, 1,1-Dimethyl-2-propinylcarbonylgruppe, 2-Ethyl-2-propinylcarbonylgruppe, 1-Hexynilcarbonylgruppe, 2-Hexynilcarbonylgruppe, 3-Hexynilcarbonylgruppe, 4-Hexynilcarbonylgruppe, 5-Hexynilcarbonylgruppe, 1-Methyl-2-pentinylcarbonylgruppe, 1-Methyl-3-pentinylcarbonylgruppe, 1-Methyl-4-pentinylcarbonylgruppe, 2-Methyl-3-pentinylcarbonylgruppe, 2-Methyl-4-pentinylcarbonylgruppe, 3-Methyl-1-pentinylcarbonylgruppe, 3-Methyl-4-pentinylcarbonylgruppe, 4-Methyl-1-pentinylcarbonylgruppe, 4-Methyl-2-pentinylcarbonylgruppe, 1,1-Dimethyl-2-butinylcarbonylgruppe, 1,1-Dimethyl-3-butinylcarbonylgruppe, 1,2-Dimethyl-3-butinylcarbonylgruppe, 2,2-Dimethyl-3-butinylcarbonylgruppe, 3,3-Dimethyl-1-butinylcarbonylgruppe, 1-Ethyl-2-butinylcarbonylgruppe, 1-Ethyl-3-butinylcarbonylgruppe.

Eine Alkylcarbonsäureestergruppe besteht in dieser Spezifikation typischerweise aus einem Carbonsäureester, an dem eine Alkylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für eine Alkylcarbonsäureestergruppe sind: Methylcarbonsäureestergruppe, Ethylcarbonsäureestergruppe, n-Propylcarbonsäureestergruppe, i-Propylcarbonsäureestergruppe, c-Propylcarbonsäureestergruppe, n-Butylcarbonsäureestergruppe, i-Butylcarbonsäureestergruppe, s-Butylcarbonsäureestergruppe, t-Butylcarbonsäureestergruppe, c-Butylcarbonsäureestergruppe, 1-Methyl-c-propylcarbonsäureestergruppe, 2-Methyl-c-propylcarbonsäureestergruppe, n-Pentylcarbonsäureestergruppe, 1-Methyl-n-butylcarbonsäureestergruppe, 2-Methyl-n-butylcarbonsäureestergruppe, 3-Methyl-n-butylcarbonsäureestergruppe, 1,1-dimethyl- n-propylcarbonsäureestergruppe, 1,2-Dimethyl-n-propylcarbonsäureestergruppe, 2,2-Dimethyl-n-propylcarbonsäureestergruppe, 1-Ethyl-n-propylcarbonsäureestergruppe, c-Pentylcarbonsäureestergruppe, 1-Methyl-c-butylcarbonsäureestergruppe, 2-Methyl-c-butylcarbonsäureestergruppe, 3-Methyl-c-butylcarbonsäureestergruppe, 1,2-Dimethyl-c-propylcarbonsäureestergruppe, 2,3-Dimethyl-c-propylcarbonsäureestergruppe, 1-Ethyl-c-propylcarbonsäureestergruppe, 2-Ethyl-c-propylcarbonsäureestergruppe, n-Hexylcarbonsäureestergruppe. 1-Methyl-n-pentylcarbonsäureestergruppe, 2-Methyl-n-pentylcarbonsäureestergruppe, 3-Methyl-n-pentylcarbonsäureestergruppe, 4-Methyl-n-pentylcarbonsäureestergruppe, 1,1-Dimethyl-n-butylcarbonsäureestergruppe, 1,2-Dimethyl-n-butylcarbonsäureestergruppe, 1,3-Dimethyl-n-butylcarbonsäureestergruppe, 2,2-Dimethyl-n-butylcarbonsäureestergruppe, 2,3-Dimethyl-n-butylcarbonsäureestergruppe, 3,3-Dimethyl- n-butylcarbonsäureestergruppe, 1-Ethyl-n-butylcarbonsäureestergruppe, 2-Ethyl-n-butylcarbonsäureestergruppe.

Eine Alkenylcarbonsäureestergruppe besteht in dieser Spezifikation typischerweise aus einem Carbonsäureester, an dem eine Alkenylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für eine Alkenylcarbonsäureestergruppe sind: Ethenylcarbonsäureestergruppe, 1-Propenylcarbonsäureestergruppe, 2-Propenylcarbonsäureestergruppe, 1-Methyl-1-ethenylcarbonsäureestergruppe, 1-Butenylcarbonsäureestergruppe, 2-Butenylcarbonsäureestergruppe, 3-Butenylcarbonsäureestergruppe, 2-Methyl-1-propenylcarbonsäureestergruppe, 2-Methyl-2-propenylcarbonsäureestergruppe, 1-Ethylethenylcarbonsäureestergruppe, 1-Methyl-1-propenylcarbonsäureestergruppe, 1-Methyl-2-propenylcarbonsäureestergruppe, 1-Pentenylcarbonsäureestergruppe, 2-Pentenylcarbonsäureestergruppe, 3-Pentenylcarbonsäureestergruppe, 4-Pentenylcarbonsäureestergruppe, 1-n-Propylethenylcarbonsäureestergruppe, 1-Methyl-1-butenylcarbonsäureestergruppe, 1-Methyl-2-butenylcarbonsäureestergruppe, 1-Methyl-3-butenylcarbonsäureestergruppe, 2-Ethyl-2-propenylcarbonsäureestergruppe, 2-Methyl-1-butenylcarbonsäureestergruppe, 2-Methyl-2-Butenylcarbonsäureestergruppe, 2-Methyl-3-butenylcarbonsäureestergruppe, 3-Methyl-1-butenylcarbonsäureestergruppe, 3-Methyl-2-butenylcarbonsäureestergruppe, 3-Methyl-3-butenylcarbonsäureestergruppe, 1,1-Dimethyl-2-propenylcarbonsäureestergruppe, 1-i-Propylethenylcarbonsäureestergruppe, 1,2-Dimethyl-1-propenylcarbonsäureestergruppe, 1,2-Dimethyl-2-propenylcarbonsäureestergruppe, 1-c-Pentenylcarbonsäureestergruppe, 2-c-Pentenylcarbonsäureestergruppe, 3-c-Pentenylcarbonsäureestergruppe, 1-Hexenylcarbonsäureestergruppe, 2-Hexenylcarbonsäureestergruppe, 3-Hexenylcarbonsäureestergruppe, 4-Hexenylcarbonsäureestergruppe, 5-Hexenylcarbonsäureestergruppe, 1-Methyl-1-pentenylcarbonsäureestergruppe, 1-Methyl-2-Pentenylcarbonsäureestergruppe, 1-Methyl-3-pentenylcarbonsäureestergruppe, 1-Methyl-4-Pentenylcarbonsäureestergruppe, 1-n-Butylethenylcarbonsäureestergruppe, 2-Methyl-1-pentenylcarbonsäureestergruppe, 2-Methyl-2-pentenylcarbonsäureestergruppe, 2-Methyl-3-pentenylcarbonsäureestergruppe, 2-Methyl-4-pentenylcarbonsäureestergruppe, 2-n-Propyl-2-propenylcarbonsäureestergruppe, 3-Methyl-1-pentenylcarbonsäureestergruppe, 3-Methyl-2-pentenylcarbonsäureestergruppe.

Eine Alkinylcarbonsäureestergruppe besteht in dieser Spezifikation typischerweise aus einem Carbonsäureester, an dem eine Alkinylgruppe, bestehend aus einem bis zu dreißig Kohlenstoffatomen, kovalent gebunden ist und die sowohl verzweigt, als auch unverzweigt sein kann. Bevorzugt besteht diese Kette aus einem bis zwanzig Kohlenstoffatomen. Beispiele für eine Alkinylcarbonsäureestergruppe sind: Ethinylcarbonsäureestergruppe, 1-Propinylcarbonsäureestergruppe, 2-Propinylcarbonsäureestergruppe, 1-Butinylcarbonsäureestergruppe, 2-Butinylcarbonsäureestergruppe, 3-Butinylcarbonsäureestergruppe, 1-Methyl-2-propinylcarbonsäureestergruppe, 1-Pentinylcarbonsäureestergruppe, 2-Pentinylcarbonsäureestergruppe, 3-Pentinylcarbonsäureestergruppe, 4-Pentinylcarbonsäureestergruppe, 1-Methyl-2-butinylcarbonsäureestergruppe, 1-Methyl-3-butinylcarbonsäureestergruppe, 2-Methyl-3-butinylcarbonsäureestergruppe, 3-Methyl-1-Butinylcarbonsäureestergruppe, 1,1-dimethyl- 2-propinylcarbonsäureestergruppe, 2-Ethyl-2-propinylcarbonsäureestergruppe, 1-Hexynilcarbonsäureestergruppe, 2-Hexynilcarbonsäureestergruppe, 3-Hexynilcarbonsäureestergruppe, 4-Hexynilcarbonsäureestergruppe, 5-Hexynilcarbonsäureestergruppe, 1-Methyl-2-pentinylcarbonsäureestergruppe, 1-Methyl-3-pentinylcarbonsäureestergruppe, 1-Methyl-4-pentinylcarbonsäureestergruppe, 2-Methyl-3-pentinylcarbonsäureestergruppe, 2-Methyl-4-pentinylcarbonsäureestergruppe, 3-Methyl-1-pentinylcarbonsäureestergruppe, 3-Methyl-4-pentinylcarbonsäureestergruppe, 4-Methyl-1-pentinylcarbonsäureestergruppe, 4-Methyl-2-pentinylcarbonsäureestergruppe, 1,1-Dimethyl-2-butinylcarbonsäureestergruppe, 1,1-Dimethyl-3-butinylcarbonsäureestergruppe, 1,2-Dimethyl-3-butinylcarbonsäureestergruppe, 2,2-Dimethyl-3-butinylcarbonsäureestergruppe, 3,3-dimethyl-1-butinylcarbonsäureestergruppe, 1-Ethyl-2-butinylcarbonsäureestergruppe, 1-Ethyl-3-butinylcarbonsäureestergruppe.

In dieser Spezifikation kann eine Alkoxygruppe aus einer Alkyleinheit bestehen, die sowohl verzweigt als auch unverzweigt sein kann. Eine Alkoxygruppe besteht typischerweise aus einem bis zu dreißig Kohlenstoffatomen, bevorzugt aus einem bis zwanzig Kohlenstoffatomen. Beispiele für eine Alkoxygruppe sind: Methoxygruppe, Ethoxygruppe, Isopropoxygruppe, n-Butoxygruppe, sec.-Butoxygruppe, tert.-Butoxygruppe, Pentyloxygruppe, n-Hexyloxygruppe, n-Heptyloxygruppe, 2-Ethylhexyloxygruppe, n-Octyloxygruppe, n-Nonyloxygruppe, n-Decyloxygruppe, n-Tridecyloxygruppe, n-Tetradecyloxygruppe, n-Pentadecyloxygruppe, n-Hexadecyloxygruppe, n-Octadecyloxygruppe or Eicosyloxygruppe. Bevorzugt sind Alkoxygruppen mit einem bis zu sechs Kohlenstoffatomen in der Alkyleinheit.

Eine Cycloalkylgruppe, wie in dieser Spezifikation beschrieben, ist typischerweise eine cyclische Gruppe, bestehend aus fünf, sechs oder sieben Kohlenstoffatomen, die jeweils unabhängig voneinander substituiert sein können. Beispiele hierzu sind Alkylgruppen oder zwei Alkylgruppen, die zusammen mit den Ringkohlenstoffen, an denen sie gebunden sind, einen weiteren Ring bilden. Ein Beispiel für eine Cycloalkylgruppe ist eine Cyclohexylgruppe.

Eine Cycloalkoxygruppe, wie in dieser Spezifikation beschrieben, ist typischerweise eine cyclische Gruppe, bestehend aus fünf, sechs oder sieben Kohlenstoffatomen von denen minderstens eines kovalent an einem Sauerstoffatom gebunden ist. Diese Ringkohlenstoffatome können jeweils unabhängig voneinander substituiert sein, beispielsweise mit Alkylgruppen oder zwei Alkylgruppen, die zusammen mit den Ringkohlenstoffen an denen sie gebunden sind, einen weiteren Ring bilden. Ein Beispiel für eine Cycloalkoxygruppe ist eine Cyclohexyloxygruppe.

Eine Arylgruppe, wie in dieser Spezifikation beschrieben, ist typischerweise eine cyclische aromatische Gruppe, bestehend aus fünf bis zehn Kohlenstoffatomen, die jeweils unabhängig voneinander substituiert sein können. Beispiele hierzu sind Alkylgruppen oder zwei Alkylgruppen, die zusammen mit den Ringkohlenstoffen, an denen sie gebunden sind, einen weiteren Ring bilden. Beispiele für eine Arylgruppe sind Phenylgruppe, o-Biphenylylgruppe, m-Biphenylylgruppe, p-Biphenylylgruppe, 1-Anthrylgruppe, 2-Anthrylgruppe, 9-Anthrylgruppe, 1-Phenantolylgruppe, 2-Phenantolylgruppe, 3-Phenantolylgruppe, 4-Phenantolylgruppe, 9-Phenantolylgruppe.

Eine Heteroarylgruppe, wie in dieser Spezifikation beschrieben, ist typischerweise eine cyclische aromatische Gruppe bestehend aus vier bis zehn Kohlenstoffatomen und mindestens einem Heteroatom, die jeweils unabhängig voneinander substituiert sein können. Beispiele hierzu sind Alkylgruppen, oder zwei Alkylgruppen die zusammen mit den Ringkohlenstoffen an denen sie gebunden sind einen weiteren Ring bilden. Beispiele für Heteroatome sind hierbei ein Sauerstoffatom, Stickstoffatom, Phosphoratom, Boratom, Selenatom oder ein Schwefelatom. Beispiele für eine Heteroarylgruppe sind Furylgruppe, Thienylgruppe, Pyrrolylgruppe oder Imidazolylgruppe.

Eine Aryloxylgruppe, wie in dieser Spezifikation beschrieben, ist typischerweise eine Arylgruppe, wobei Aryl zuvor bereits definiert wurde, die kovalent an ein Sauerstoffatom gebunden ist. Beispiele für eine Aryloxylgruppe sind Phenyloxyl oder Naphthyloxyl.

Eine Aralkylgruppe, wie in dieser Spezifikation beschrieben, ist typischerweise eine Arylgruppe, wobei Aryl zuvor bereits definiert wurde, die kovalent an eine Alkylgruppe gebunden ist. Diese Gruppe kann beispielsweise mit Alkylgruppen oder Halogenatomen substituiert sein. Ein Beispiel für eine Aralylgruppe ist Benzyl.

Die durchschnittliche Molmasse (Mₙ) der oligomeren oder polymeren Verbindung dieser Erfindung liegt im Bereich 660 bis 3300000 g/mol, bevorzugt im Bereich von 1650 bis 1650000 g/mol, besonderes bevorzugt im Bereich von 3300 bis 330000 g/mol. Die durchschnittliche Molmasse wird mittels Größenausschlusschromatogaphie (Polystyrolstandard) bestimmt.
Im Allgemeinen besteht die oligomere oder polymere Verbindung der erfindungsgemäßen allgemeinen Formel I dieser Erfindung aus 2 und 5000 Wiederholeinheiten, bevorzugt aus 10 bis 1000 Wiederholeinheiten.

Die oligomerien oder polymeren Verbindungen der erfindungsgemäßen allgemeinen Formel I dieser Erfindung können sowohl Homopolymere als auch Copolymere sein. Homopolymere sind Polymere, die nur aus einem Monomer synthetisiert wurden. Copolymere sind Polymere, die aus zwei oder mehreren Polymeren synthetisiert wurden. Werden zwei oder mehrere Monomere bei der Synthese verwendet, so können die Monomere der Wiederholeinheiten der oligomeren oder polymeren Verbindung dieser Erfindung sowohl in statistischer Verteilung, als Blöcke oder alternierend in der oligomeren oder polymeren Verbindung vorliegen. Die oligomeren oder polymeren Verbindungen dieser Erfindung können sowohl in linearer Form als auch als quervernetzt sein. Eine Quervernetzung kann beispielweise durch die Copolymerisation mit einem geringen Anteils eines organischen Molekül mit zwei polymerisierbaren Gruppen, bevorzugt einem höher funktionalisierten Monomer, erfolgen.

Die oligomeren oder polymeren Verbindungen der erfindungsgemäßen allgemeinen Formel I werden durch die Polymerisation einer 11,11,12,12-Tetracyanoanthrachinondimethanverbindung der allgemeinen Formel I' synthetisiert.

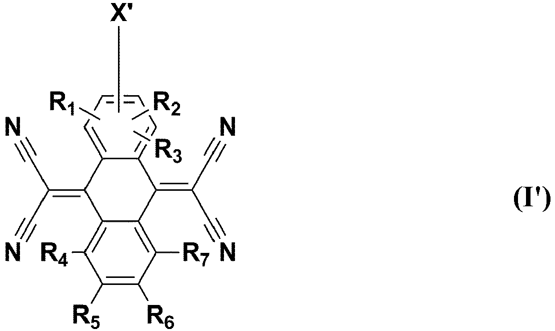

X' ist dabei bevorzugt eine organische polymerisierbare Gruppe, die typischerweise aus einer organischen Doppelbindung, oder einer organischen Dreifachbindung, oder einem Oxiran oder einem Aziridin besteht. Besonders bevorzugt sind dabei organische polymerisierbare Gruppen, die in den Formeln II' bis VIII' dargestellt sind.

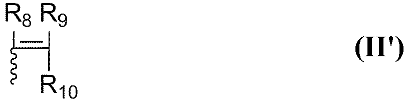

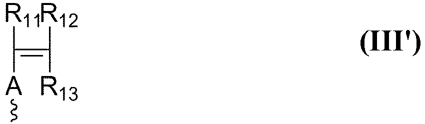

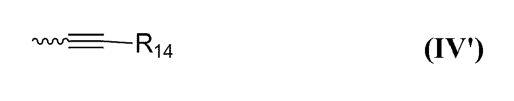

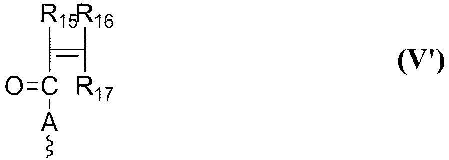

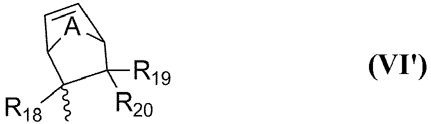

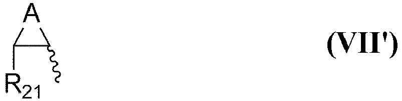

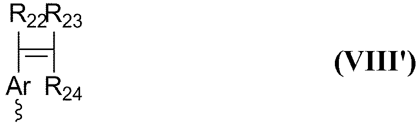

Mit wiederum den bereits vorbeschriebenen Definitionen für R₈ bis R₂₄, A und Ar.

Eine 11,11,12,12-Tetracyanoanthrachinondimethanverbindung der allgemeinen Formel I' kann durch die Kombination bekannter Reaktionen hergestellt werden.

Die Herstellung der Verbindung der allgemeinen Formel I' ist in nachfolgenden Schemata 1-7 dargestellt, jedoch nicht auf diese beschränkt.

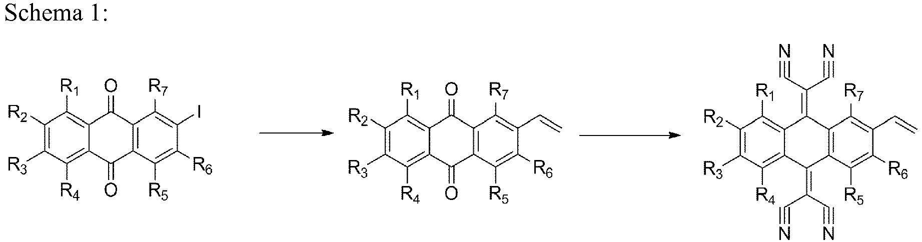

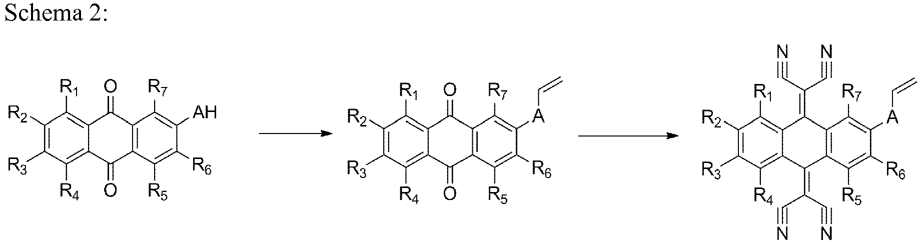

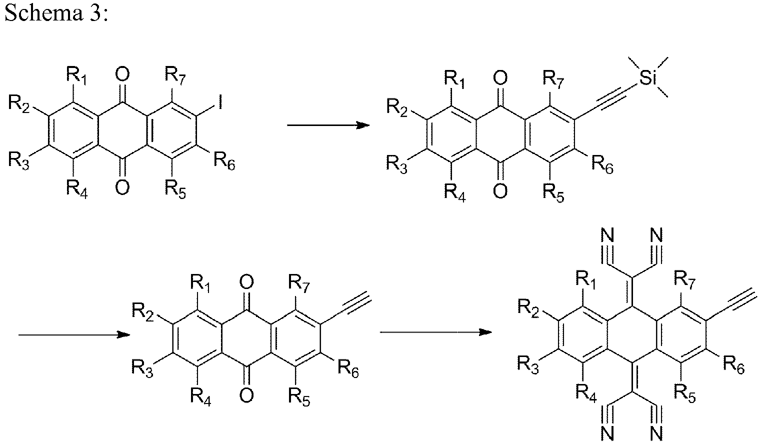

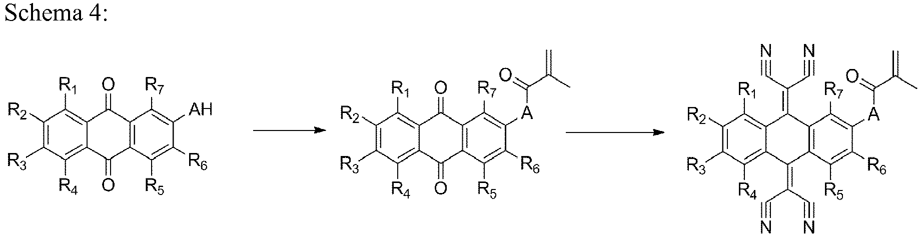

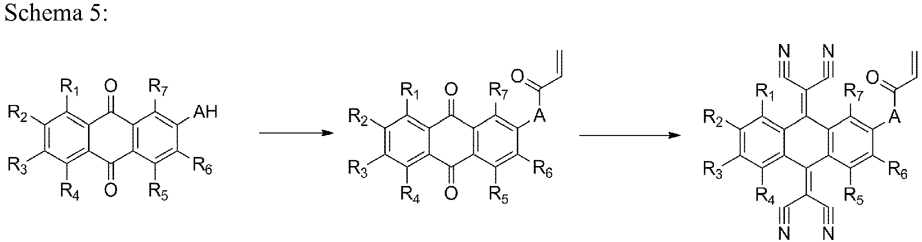

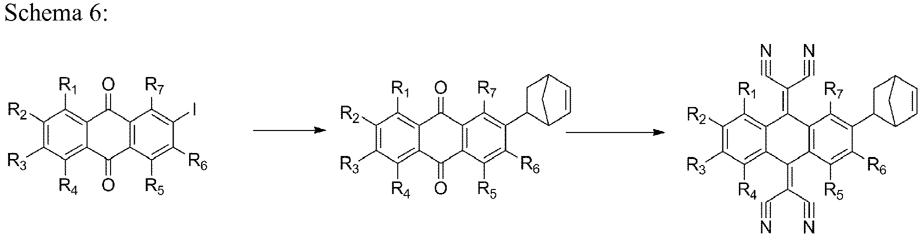

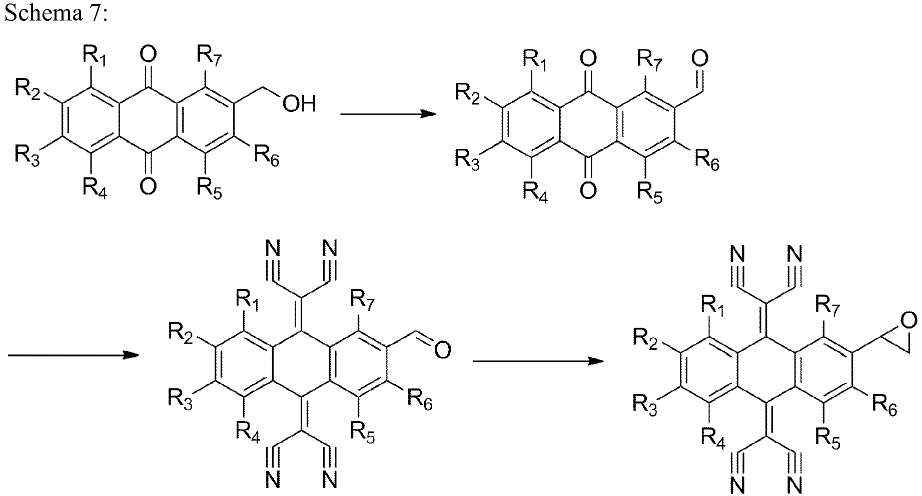

An sich bekannte Methoden sind ausreichend, um die Verbindung der oben genannten allgemeinen Formel I' gemäß den vorstehenden Schemata 1-7 zu synthetisieren.

Für den Fall, dass X' in der allgemeinen Formel I' der oben genannten Formel II' entspricht, kann die Verbindung der Formel I' nach einer bekannten Methode der Synthese von Polystyrol und deren Abwandlungen synthetisiert werden. Bevorzugt wird die oben genannte Verbindung I' durch radikalische Polymerisation, wie beispielsweise freie radikalische Polymerisation, aber auch eine kontrollierte radikalische Polymerisationsmethode, wie beispielsweise, Reversible Addition-Fragmentation Chain Transfer Polymerisation (RAFT), Atom-Transfer Radical Polymerisation (ATRP) oder Nitroxide-Mediated Polymerisation (NMP), in einem Temperaturbereich von -30 bis 150 °C, vorteilhaft in einem Temperaturbereich von 40 bis 120 °C, in einem Lösungsmittel und in einer Reaktionszeit von 0,1 bis 100 Stunden unter der Verwendung eines Initiators, wie beispielsweise Azoverbindungen oder Peroxide, bevorzugt Benzoylperoxid oder 2,2'-Azobisisobutyrolnitril, synthetisiert. Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Ebenfalls bevorzugt wird die oben genannte Verbindung I' durch kationische Polymerisation in einem Temperaturbereich von -30 bis 150 °C, vorteilhaft in einem Temperaturbereich von -20 bis 50 °C, in einem Lösungsmittel und einer Reaktionszeit von 0,1 bis 100 Stunden unter der Verwendung eines Katalysators, wie beispielsweise Lewissäuren oder Protonensäuren, bevorzugt Schwefelsäure, Salpetersäure, Perchlorsäure, Bortrifluoretherat Komplex, Aluminiumtrichlorid, Zinntetrachlorid oder Titantetrachlorid, synthetisiert. Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, Tetrahydrofuran, 1,4-Dioxolan, 1,2-Dichlorethan, Toluol, Xylol, Chlorbenzol oder o-Dichlorbenzol.

Ebenfalls bevorzugt wird die oben genannte Verbindung I' durch anionische Polymerisation in einem Temperaturbereich von -78 bis 150 °C, vorteilhaft in einem Temperaturbereich von -50 bis 50 °C, in einem Lösungsmittel und einer Reaktionszeit von 0,1 bis 100 Stunden unter der Verwendung eines Katalysators, wie beispielsweise Lewisbasen oder Basen, bevorzugt Metallamide, wie Natriumamid und LiC₂H₅, Alkoxiden wie Methanolat oder Ethanolat, Hydroxide wie Natriumhydroxyd oder Kaliumhydroxyd, Cyanide, Phosphine, Amine oder metallorganische Verbindungen wie beispielsweise n-Buthyllithium oder Vinylmagnesiumbromid synthetisiert. Für verwendete Lösungsmittel bestehen kaum Einschränkungen. Bevorzugt sind organische Lösungsmittel, wie beispielsweise, Tetrahydrofuran, 1,4-Dioxolan, Diethylether, tert-Butylmethylether, Toluol, Xylol, Chlorbenzol oder o-Dichlorbenzol.

Ebenfalls bevorzugt wird die oben genannte Verbindung I' durch anionische Gruppentransfer Polymerisation in einem Temperaturbereich von -30 bis 150 °C, vorteilhaft in einem Temperaturbereich von -20 bis 50 °C, in einem Lösungsmittel und einer Reaktionszeit von 0,1 bis 100 Stunden unter der Verwendung eines Initiator wie beispielsweise eines Silylketenacetal und unter Verwendung eines Katalysators, wie beispielsweise anorganische Salze, bevorzugt Fluoride, Azide oder Cyanide oder Lewissäuren, bevorzugt Zinkchlorid oder Aluminiumdialkylchlorid, synthetisiert. Für verwendete Lösungsmittel bestehen kaum Einschränkungen. Bevorzugt sind organische Lösungsmittel, wie beispielsweise, N,N'-Dimethylformamid, N,N'-Dimethylacetamid, Dimethylsulfoxid, N-Methylpyrrolidin, Dichlormethan, 1,2-Dichlorethan, Tetrahydrofuran, 1,4-Dioxolan, Diethylether, tert-Butylmethylether, Toluol, Xylol, Chlorbenzol oder o-Dichlorbenzol.

Für den Fall, dass X' in der allgemeinen Formel I' der oben genannten Formel III' entspricht, kann die Verbindung der Formel I' nach einer bekannten Methode der Synthese von Polyvinylether und deren Abwandlungen synthetisiert werden. Bevorzugt wird die oben genannte Verbindung I' durch kationische Polymerisation in einem Temperaturbereich von -30 bis 150 °C, vorteilhaft in einem Temperaturbereich von -20 bis 50 °C, in einem Lösungsmittel und einer Reaktionszeit von 0,1 bis 100 Stunden unter der Verwendung eines Katalysators, wie beispielsweise Lewissäuren oder Protonensäuren, bevorzugt Schwefelsäure, Salpetersäure, Perchlorsäure, Bortrifluoretherat Komplex, Aluminiumtrichlorid, Zinntetrachlorid oder Titantetrachlorid, synthetisiert.
Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, Tetrahydrofuran, 1,4-Dioxolan, 1,2-Dichlorethan, Toluol, Xylol, Chlorbenzol oder o-Dichlorbenzol.

Für den Fall, dass X' in der allgemeinen Formel I' der oben genannten Formel IV' entspricht, kann die Verbindung der Formel I' nach einer bekannten Methode der Synthese von Polyacetylenen und deren Abwandlungen synthetisiert werden. Bevorzugt wird die oben genannte Verbindung I' durch metallkatalysierte Polymerisation in einem Temperaturbereich von -30 bis 150 °C, vorteilhaft in einem Temperaturbereich von 0 bis 100 °C, in einem Lösungsmittel und in einer Reaktionszeit von 0,1 bis 100 Stunden unter der Verwendung eines Katalysators, wie beispielsweise einem Wilkinson Katalysator, einem Ziegler-Natta Katalysator, einem Luttinger Katalysator, einem Molybdän Komplex, einem Wolframkomplex, einem Rhodiumkomplex oder einer elektrochemischen Polymerisationsmethode unter Verwendung von Nickelbromid, synthetisiert.
Für verwendete Lösungsmittel bestehen kaum Einschränkungen. Bevorzugt sind organische Lösungsmittel wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Für den Fall, dass X' in der allgemeinen Formel I' der oben genannten Formel V' entspricht, kann die Verbindung der Formel I' nach einer bekannten Methode der Synthese von Polyacrylaten und deren Abwandlungen synthetisiert werden. Bevorzugt wird die oben genannte Verbindung I' durch freie radikalische Polymerisation, aber auch kontrollierte radikalische Polymerisationsmethoden, wie beispielsweise, Reversible Addition-Fragmentation Chain Transfer Polymerisation (RAFT), Atom-Transfer Radical Polymerisation (ATRP), Cobalt vermittelte radikalische Polymerisation (CMRP) oder Nitroxide-Mediated Polymerisation (NMP), in einem Temperaturbereich von -30 bis 150 °C, vorteilhaft in einem Temperaturbereich von 40 bis 120 °C, in einem Lösungsmittel und in einer Reaktionszeit von 0,1 bis 100 Stunden unter der Verwendung eines Initiators, wie beispielsweise Azoverbindungen oder Peroxiden, bevorzugt Benzoylperoxid oder 2,2'-Azobisisobutyrolnitril, synthetisiert.
Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Ebenfalls bevorzugt wird die oben genannte Verbindung I' durch anionische Polymerisation in einem Temperaturbereich von -78 bis 150 °C, vorteilhaft in einem Temperaturbereich von -50 bis 50 °C, in einem Lösungsmittel und einer Reaktionszeit von 0,1 bis 100 Stunden unter der Verwendung eines Katalysators, wie beispielsweise Lewisbasen oder Basen, bevorzugt Metallamide, wie Natriumamid und LiC₂H₅, Alkoxiden wie Methanolat oder Ethanolat, Hydroxide wie Natriumhydroxyd oder Kaliumhydroxyd, Cyanide, Phosphine, Amine oder metallorganische Verbindungen wie beispielsweise n-Buthyllithium oder Vinylmagnesiumbromid synthetisiert. Für verwendete Lösungsmittel bestehen kaum Einschränkungen. Bevorzugt sind organische Lösungsmittel, wie beispielsweise, Tetrahydrofuran, 1,4-Dioxolan, Diethylether, tert-Butylmethylether, Toluol, Xylol, Chlorbenzol oder o-Dichlorbenzol.

Ebenfalls bevorzugt wird die oben genannte Verbindung I' durch anionische Gruppentransfer Polymerisation in einem Temperaturbereich von -78 bis 150 °C, vorteilhaft in einem Temperaturbereich von -20 bis 50 °C, in einem Lösungsmittel und einer Reaktionszeit von 0,1 bis 100 Stunden unter der Verwendung eines Initiator wie beispielsweise eines Silylketenacetal und unter Verwendung eines Katalysators, wie beispielsweise anorganische Salze, bevorzugt Fluoride, Azide oder Cyanide oder Lewissäuren, bevorzugt Zinkchlorid oder Aluminiumdialkylchlorid, synthetisiert. Für verwendete Lösungsmittel bestehen kaum Einschränkungen. Bevorzugt sind organische Lösungsmittel, wie beispielsweise, N,N'-Dimethylformamid, N,N'-Dimethylacetamid, Dimethylsulfoxid, N-Methylpyrrolidin, Dichlormethan, 1,2-Dichlorethan, Tetrahydrofuran, 1,4-Dioxolan, Diethylether, tert-Butylmethylether, Toluol, Xylol, Chlorbenzol oder o-Dichlorbenzol.

Für den Fall, dass X' in der allgemeinen Formel I' der oben genannten Formel VI' entspricht, kann die Verbindung der Formel I' nach einer bekannten Methode der Synthese von Polynorbornenen und deren Abwandlungen synthetisiert werden. Bevorzugt wird die oben genannte Verbindung I' durch metalkatalysierte Polymerisation in einem Temperaturbereich von -30 bis 150 °C, vorteilhaft in einem Temperaturbereich von 0 bis 100 °C, in einem Lösungsmittel und in einer Reaktionszeit von 0,1 bis 100 Stunden unter der Verwendung eines Katalysators, wie beispielsweise einem Grubbs Katalysator, einem Molybdänkomplex, einem Wolframkomplex oder einem Rutheniumkomplex, synthetisiert. Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Tetrahydrofuran, Toluol, Xylol, Chlorbenzol oder o-Dichlorbenzol.

Für den Fall, dass X' in der allgemeinen Formel I' der oben genannten Formel VII' entspricht, kann die Verbindung der Formel I' nach einer bekannten Methode der Synthese von Polyethylengylkol und deren Abwandlungen synthetisiert werden.
Bevorzugt wird die oben genannte Verbindung I' durch kationische Polymerisation in einem Temperaturbereich von -30 bis 150 °C, vorteilhaft in einem Temperaturbereich von 40 bis 120 °C, in einem Lösungsmittel und einer Reaktionszeit von 0,1 bis 100 Stunden unter der Verwendung eines Katalysators, wie beispielsweise Lewissäuren oder Protonensäuren, bevorzugt Schwefelsäure, Salpetersäure, Perchlorsäure, Bortrifluoretheratkomplex, Aluminiumtrichlorid, Zinntetrachlorid, Diethylzink/Wasser oder Titantetrachlorid, synthetisiert.
Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, Tetrahydrofuran, 1,4-Dioxolan, 1,2-Dichlorethan, Toluol, Xylol, Chlorbenzol oder o-Dichlorbenzol.

Ebenfalls bevorzugt wird die oben genannte Verbindung I' durch anionische Polymerisation in einem Temperaturbereich von -78 bis 150 °C, vorteilhaft in einem Temperaturbereich von -50 bis 50 °C, in einem Lösungsmittel und einer Reaktionszeit von 0,1 bis 100 Stunden unter der Verwendung eines Katalysators, wie beispielsweise Lewisbasen oder Basen, bevorzugt Metallamide, wie Natriumamid und LiC₂H₅, Alkoxiden wie Methanolat oder Ethanolat, Hydroxide wie Natriumhydroxyd oder Kaliumhydroxyd, Cyanide, Phosphine, Amine oder metallorganische Verbindungen wie beispielsweise n-Buthyllithium oder Vinylmagnesiumbromid, synthetisiert. Für verwendete Lösungsmittel bestehen kaum Einschränkungen. Bevorzugt sind organische Lösungsmittel, wie beispielsweise, Tetrahydrofuran, 1,4-Dioxolan, Diethylether, tert-Butylmethylether, Toluol, Xylol, Chlorbenzol oder o-Dichlorbenzol.

Für den Fall, dass X' in der allgemeinen Formel I' der oben genannten Formel VIII' entspricht, kann die Verbindung der Formel I' nach einer bekannten Methode der Synthese von Polystyrol und deren Abwandlungen synthetisiert werden. Bevorzugt wird die oben genannte Verbindung I' durch radikalische Polymerisation, wie beispielsweise freie radikalische Polymerisation, aber auch kontrollierte radikalische Polymerisationsmethode, wie beispielsweise, Reversible Addition-Fragmentation Chain Transfer Polymerisation (RAFT), Atom-Transfer Radical Polymerisation (ATRP), oder Nitroxide-Mediated Polymerisation (NMP), in einem Temperaturbereich von -30 bis 150 °C, vorteilhaft in einem Temperaturbereich von 40 bis 120 °C, in einem Lösungsmittel und in einer Reaktionszeit von 0,1 bis 100 Stunden unter der Verwendung eines Initiators, wie beispielsweise Azoverbindungen oder Peroxide, bevorzugt Benzoylperoxid oder 2,2'-Azobisisobutyrolnitril, synthetisiert. Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Ebenfalls bevorzugt wird die oben genannte Verbindung I' durch kationische Polymerisation in einem Temperaturbereich von -30 bis 150 °C, vorteilhaft in einem Temperaturbereich von -20 bis 50 °C, in einem Lösungsmittel und einer Reaktionszeit von 0,1 bis 100 Stunden unter der Verwendung eines Katalysators, wie beispielsweise Lewissäuren oder Protonensäuren, bevorzugt Schwefelsäure, Salpetersäure, Perchlorsäure, Bortrifluoretherat Komplex, Aluminiumtrichlorid, Zinntetrachlorid oder Titantetrachlorid, synthetisiert. Für verwendete Lösungsmittel bestehen kaum Einschränkungen. Bevorzugt sind organische Lösungsmittel, wie beispielsweise N,N'-Dimethylformamid, N,N'-Dimethylacetamid, Dimethylsulfoxid, N-Methylpyrrolidin, Dichlormethan, Tetrahydrofuran, 1,4-Dioxolan, 1,2-Dichlorethan, Toluol, Xylol, Chlorbenzol oder o-Dichlorbenzol.

Ebenfalls bevorzugt wird die oben genannte Verbindung I' durch anionische Polymerisation in einem Temperaturbereich von -78 bis 150 °C, vorteilhaft in einem Temperaturbereich von -50 bis 50 °C, in einem Lösungsmittel und einer Reaktionszeit von 0,1 bis 100 Stunden unter der Verwendung eines Katalysators, wie beispielsweise Lewisbasen oder Basen, bevorzugt Metallamide, wie Natriumamid und LiC₂H₅, Alkoxiden wie Methanolat oder Ethanolat, Hydroxide wie Natriumhydroxyd oder Kaliumhydroxyd, Cyanide, Phosphine, Amine oder metallorganische Verbindungen wie beispielsweise n-Buthyllithium oder Vinylmagnesiumbromid, synthetisiert. Für verwendete Lösungsmittel bestehen kaum Einschränkungen. Bevorzugt sind organische Lösungsmittel, wie beispielsweise, Tetrahydrofuran, 1,4-Dioxolan, Diethylether, tert-Butylmethylether, Toluol, Xylol, Chlorbenzol oder o-Dichlorbenzol.

Ebenfalls bevorzugt wird die oben genannte Verbindung I' durch anionische Gruppentransfer Polymerisation in einem Temperaturbereich von -78 bis 150 °C, vorteilhaft in einem Temperaturbereich von -20 bis 50 °C, in einem Lösungsmittel und einer Reaktionszeit von 0,1 bis 100 Stunden unter der Verwendung eines Initiators wie beispielsweise eines Silylketenacetal sowie unter Verwendung eines Katalysators, wie beispielsweise anorganische Salze, bevorzugt Fluoride, Azide oder Cyanide oder Lewissäuren, bevorzugt Zinkchlorid oder Aluminiumdialkylchlorid, synthetisiert. Für verwendete Lösungsmittel bestehen kaum Einschränkungen. Bevorzugt sind organische Lösungsmittel, wie beispielsweise, N,N'-Dimethylformamid, N,N'-Dimethylacetamid, Dimethylsulfoxid, N-Methylpyrrolidin, Dichlormethan, 1,2-Dichlorethan, Tetrahydrofuran, 1,4-Dioxolan, Diethylether, tert-Butylmethylether, Toluol, Xylol, Chlorbenzol oder o-Dichlorbenzol.

Außerdem werden die oligomeren oder polymeren Verbindungen der erfindungsgemäßen allgemeinen Formel I durch polymeranaloge Umsetzung einer 11,11,12,12-Tetracyanoanthrachinondimethanverbindung der allgemeinen Formel I" mit einer oligomeren oder polymeren Verbindung der allgemeinen Formel P' synthetisiert. 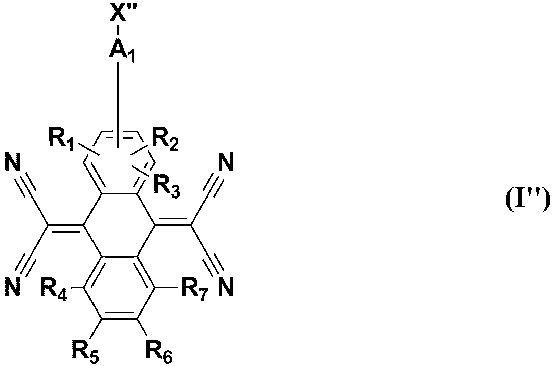 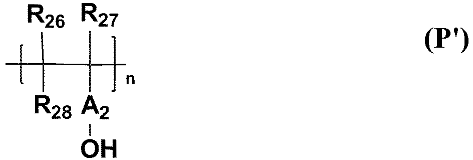 wobei
- R₁ bis R₇ und R₂₆ bis R₂₈:: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei Wasserstoffatome als mindestens fünf der Substituenten R₁ bis R₇, und Nicht-Wasserstoffatome, vorzugsweise Halogenatome, Alkylgruppen, Alkoxygruppen, Cyanogruppen und/oder Nitrogruppen als null bis zwei der Substituenten R₁ bis R₇ sind, und/oder Wasserstoffatome als mindestens zwei der Substituenten R₂₆ bis R₂₈ und Nicht-Wasserstoffatome, vorzugsweise Halogenatome, Alkylgruppen, Alkoxygruppen, Cyanogruppen und/oder Nitrogruppen, als null bis einem der Substituenten R₂₆ bis R₂₈ besonders bevorzugt sind,
- X":: eine elektrophile organische Gruppe ist, welche nukleophil von der Hydoxygruppe der Verbindung P' angegriffen wird und somit eine kovalente Bindung zwischen der Verbindung I" und P' bildet (bevorzugt ist X" eine Isocyanatgruppe, eine Carbonsäurehalogenidgruppe, wobei das Halogen vorzugsweise Chlor, Brom oder Iod ist, eine Carbonsäuregruppe, ein Halogenatom, wobei das Halogen bevorzugt Chlor, Brom oder Iod ist, oder eine Carbonylgruppe, eine Anhydridgruppe),
- A₁ und A₂:: bevorzugt eine kovalente Bindung, eine Alkylgruppe, eine Alkenylgruppe, eine Alkinylgruppe, eine Alkoxygruppe, eine Alkylthiogruppe, eine Haloalkylgruppe, eine Haloalkoxygruppe, eine Cycloalkylgruppe, eine Cycloalkoxygruppe, eine Arylgruppe, eine Heteroarylgruppe, eine Aryloxygruppe, eine Aralkylgruppe, eine Monoalkylaminogruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe, wobei eine kovalente Bindung oder eine Alkylgruppe als A₁ und A₂ besonders vorteilhaft ist,
- n:: eine Ganzzahl größer gleich 2 ist.

Die Herstellung der Verbindung der erfindungsgemäßen allgemeinen Formel I durch polymeranaloge Reaktion aus den oben genannten Verbindungen I" und P' und deren Herstellung ist in nachfolgenden Schemata 8-13 dargestellt, jedoch nicht auf diese beschränkt.

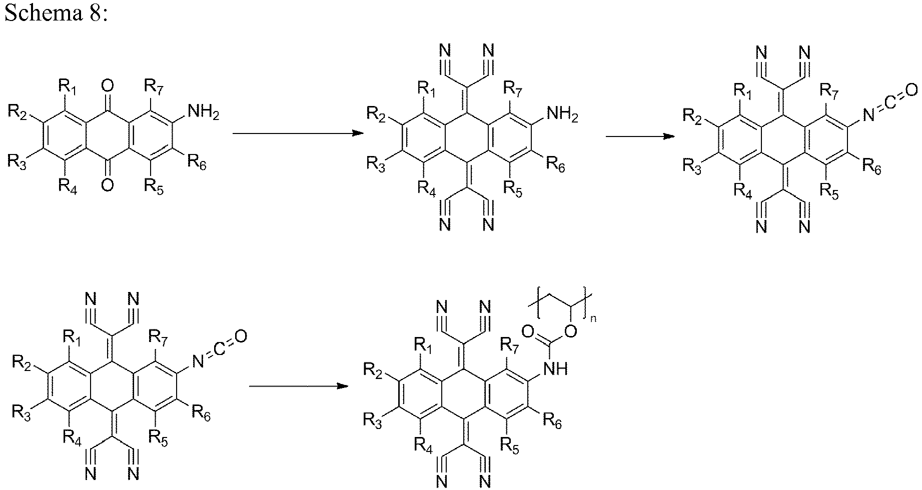

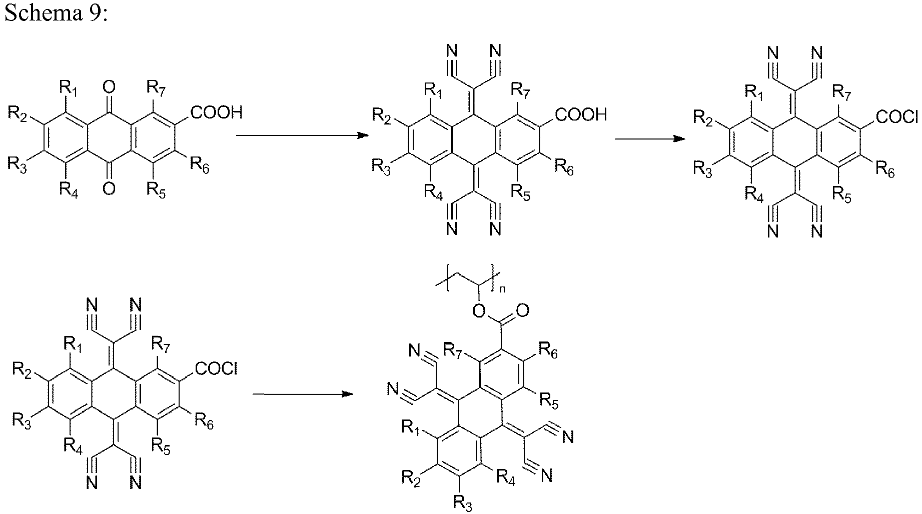

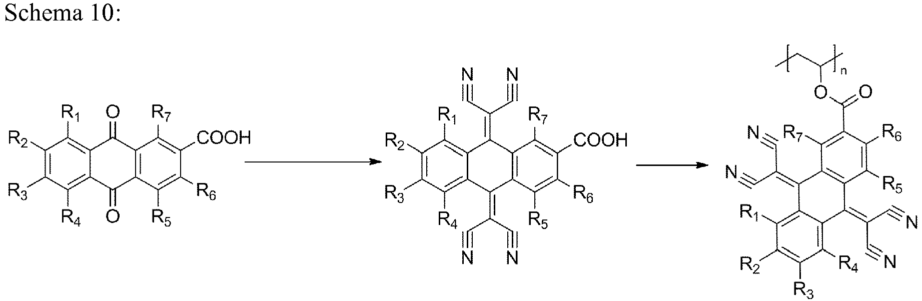

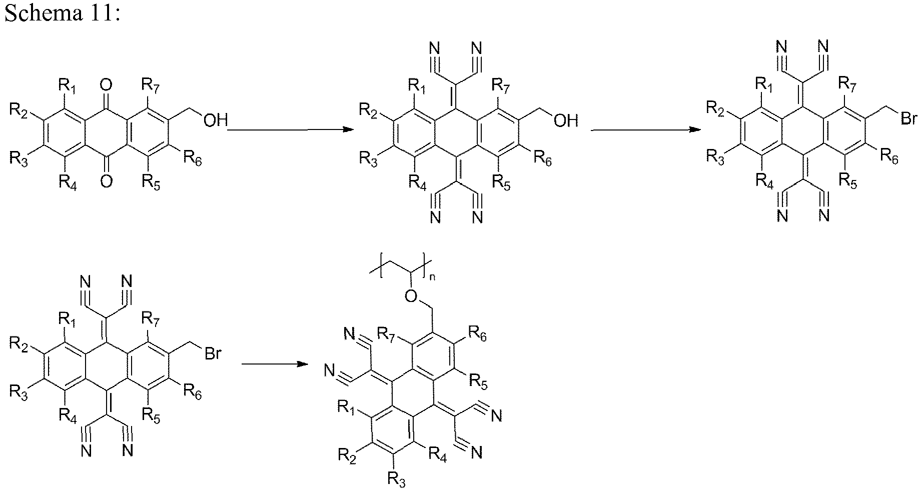

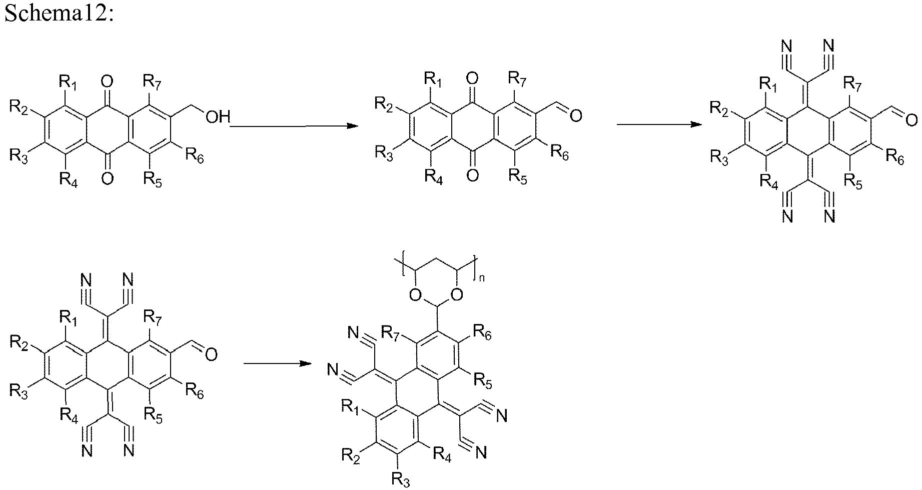

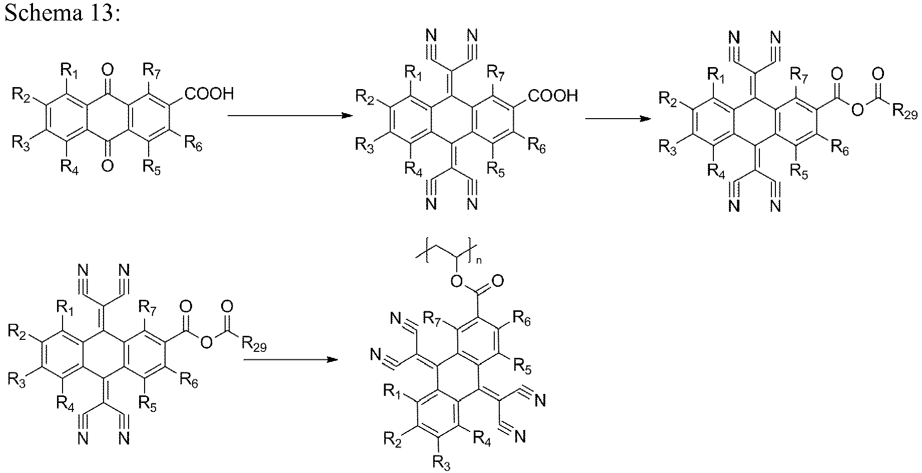

R₂₉ ist bevorzugt ein Wasserstoffatome, eine Alkylgruppe, eine Alkenylgruppe, eine Alkinylgruppe, eine Alkoxygruppe, eine Alkylthiogruppe, eine Cycloalkylgruppe, eine Cycloalkoxygruppe, eine Arylgruppe, eine Heteroarylgruppe, eine Aryloxygruppe, eine Aralkylgruppe. Besonders bevorzugt ist R₂₉ eine Alkylgruppe.

An sich bekannte Methoden sind ausreichend, um die Verbindung der oben genannten erfindungsgemäßen allgemeinen Formel I gemäß nach den Schemata 8-13 zu synthetisieren.

Für den Fall, dass X" in der allgemeinen Formel I" einer Isocyanatgruppe entspricht, kann die Verbindung der Formel I durch Reaktion der Verbindung I" mit der Verbindung P' nach einer bekannten Methode der Synthese von Urethanen und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Für den Fall, dass X" in der allgemeinen Formel I" einer Carbonsäurehalogenidgruppe entspricht, kann die Verbindung der Formel I durch Reaktion der Verbindung I" mit der Verbindung P' nach einer bekannten Methode der Synthese von Carbonsäureester und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden unter der Verwendung eines Katalysators, wie beispielsweise eines Pyridinderivates, wie typischerweise 4-(Dimethylamino)pyridine, oder eines Carbodiimidderivates wie typischerweise N,N'-Dicyclohexylcarbodiimide synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Für den Fall, dass X" in der allgemeinen Formel I" einer Carbonsäuregruppe entspricht, kann die Verbindung der Formel I durch Reaktion der Verbindung I" mit der Verbindung P' nach einer bekannten Methode der Synthese von Carbonsäureester und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden unter der Verwendung eines Katalysators, wie beispielsweise eines Pyridinderivates, wie typischerweise 4-(Dimethylamino)pyridine, oder eines Carbodiimidderivates, wie typischerweise N,N'-Dicyclohexylcarbodiimide, synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Für den Fall, dass X" in der allgemeinen Formel I" einem Halogenatom entspricht, kann die Verbindung der Formel I durch Reaktion der Verbindung I" mit der Verbindung P' nach einer bekannten Methode der Synthese von Ethern und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden unter der Verwendung eines Katalysators, wie beispielsweise Base wie Natriumhydrid, Natriumhydroxid, Kalium tert-Butylat, DBU, oder DBN synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Für den Fall, dass X" in der allgemeinen Formel I" einer Carbonylgruppe entspricht, kann die Verbindung der Formel I durch Reaktion der Verbindung I" mit der Verbindung P' nach einer bekannten Methode der Synthese von Acetalen und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden unter der Verwendung eines Katalysators, wie beispielsweise Protonensäure wie p-Toluolsulfonsäure, Salzsäure, Schwefelsäure, oder Trifluoressigsäure synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Für den Fall, dass X" in der allgemeinen Formel I" einer Anhydridgruppe entspricht, kann die Verbindung der Formel I durch Reaktion der Verbindung I" mit der Verbindung P' nach einer bekannten Methode der Synthese von Carbonsäureester und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden unter der Verwendung eines Katalysators, wie beispielsweise eines Pyridinderivates, wie typischerweise 4-(Dimethylamino)pyridine, oder eines Carbodiimidderivates wie typischerweise N,N'-Dicyclohexylcarbodiimide synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Außerdem werden die oligomeren oder polymeren Verbindungen der erfindungsgemäßen allgemeinen Formel I werden durch polymeranaloge Umsetzung einer 11,11,12,12-Tetracyanoanthrachinondimethanverbindung der allgemeinen Formel I"' mit einer oligomeren oder polymeren Verbindung der allgemeinen Formel P" synthetisiert. 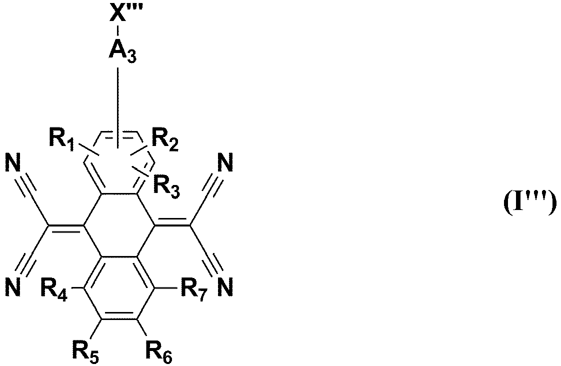 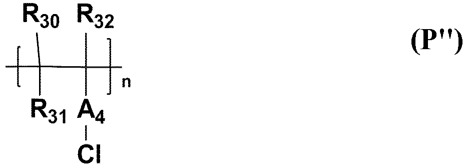 wobei
- R₁ bis R₇ und R₃₀ bis R₃₂:: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Halogenatome oder eine Kombination dieser Gruppen oder Atome darstellen können, wobei Wasserstoffatome als mindestens fünf der Substituenten R₁ bis R₇ und Nicht-Wasserstoffatome, vorzugsweise Halogenatome, Alkylgruppen, Alkoxygruppen, Cyanogruppen und/oder Nitrogruppen, als null bis zwei der Substituenten R₁ bis R₇ und/oder Wasserstoffatome als mindestens zwei der Substituenten R₃₀ bis R₃₂, und NichtWasserstoffatome, vorzugsweise Halogenatome, Alkylgruppen, Alkoxygruppen, Cyanogruppen und/oder Nitrogruppen, als null bis einem der Substituenten R₃₀ bis R₃₂ besonders bevorzugt sind,
- X"':: eine nukleophile organische Gruppe ist, welche nukleophil an dem Nachbaratom des Halogenatom der Verbindung P" angreift und somit eine kovalente Bindung zwischen der Verbindung I"' und P" bildet, wobei eine Hydroxygruppe oder eine Thiolgruppe als X'" bevorzugt ist,
- A₃ und A₄:: bevorzugt eine kovalente Bindung, eine Alkylgruppe, eine Alkenylgruppe, eine Alkinylgruppe, eine Alkoxygruppe, eine Alkylthiogruppe, eine Cycloalkylgruppe, eine Cycloalkoxygruppe, eine Arylgruppe, eine Heteroarylgruppe, eine Aryloxygruppe, eine Aralkylgruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sind, wobei eine kovalente Bindung oder eine Alkylgruppe als A₁ und A₂ besonders bevorzugt ist,
- n:: eine Ganzzahl größer gleich 2 ist.

Die Herstellung der Verbindung der allgemeinen Formel 1 mit Hilfe einer polymeranalogen Reaktion aus den aus den oben genannten Verbindungen I"' und P" ist in nachfolgenden Schemata 14-15 dargestellt, jedoch nicht auf diese beschränkt.

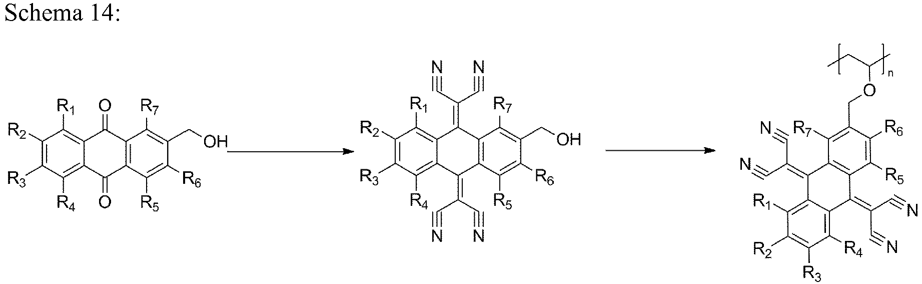

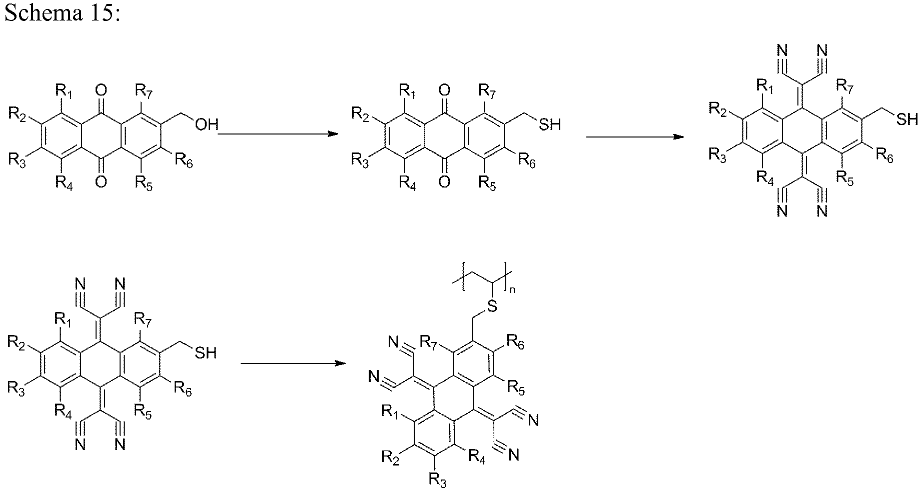

Für den Fall, dass X" in der allgemeinen Formel I"' einer Hydroxygruppe oder einer Thiolgruppe entspricht, kann die Verbindung der Formel I durch Reaktion der Verbindung I"' mit der Verbindung P" nach einer bekannten Methode der Synthese von Ethern und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden unter der Verwendung eines Katalysators, wie beispielsweise Base wie Natriumhydrid, Natriumhydroxid, Kalium tert-Butylat, DBU, oder DBN synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Außerdem werden die oligomeren oder polymeren Verbindungen der erfindungsgemäßen allgemeinen Formel I durch polymeranaloge Umsetzung einer 11,11,12,12-Tetracyanoanthrachinondimethanverbindung der allgemeinen Formel I"" mit einer oligomeren oder polymeren Verbindung der allgemeinen Formel P"' synthetisiert. 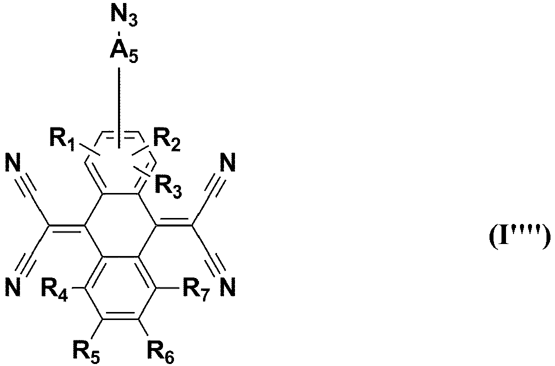 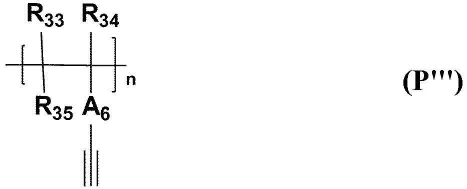 wobei
- R₁ bis R₇ und R₃₃ bis R₃₅:: unabhängig voneinander bevorzugt Wasserstoffatome, Alkylgruppen, Alkenylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei Wasserstoffatome als mindestens fünf der Substituenten R₁ bis R₇ und Nicht-Wasserstoffatome, vorzugsweise Halogenatome, Alkylgruppen, Alkoxygruppen, Cyanogruppen und/oder Nitrogruppen, als null bis zwei der Substituenten R₁ bis R₇ und/oder Wasserstoffatome als mindestens zwei der Substituenten R₃₃ bis R₃₅ und Nicht-Wasserstoffatome, vorzugsweise Halogenatome, Alkylgruppen, Alkoxygruppen, Cyanogruppen und/oder Nitrogruppen, als null bis einem der Substituenten R₃₃ bis R₃₅ besonders bevorzugt sind,
- A₅ und A₆:: bevorzugt eine kovalente Bindung, eine Alkylgruppe, eine Alkenylgruppe, eine Alkoxygruppe, eine Alkylthiogruppe, eine Haloalkylgruppe, eine Haloalkoxygruppe, eine Cycloalkylgruppe, eine Cycloalkoxygruppe, eine Arylgruppe, eine Heteroarylgruppe, eine Aryloxygruppe, eine Aralkylgruppe, eine Monoalkylaminogruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sind, wobei eine kovalente Bindung, eine Arylgruppe oder eine Alkylgruppe als A₅ und A₆ besonders bevorzugt ist,
- n:: eine Ganzzahl größer gleich 2 ist.

Die Herstellung der Verbindung der allgemeinen Formel I mit Hilfe einer polymeranalogen Reaktion aus den aus den oben genannten Verbindungen I"" und P'" ist im nachfolgenden Schema 16 dargestellt, jedoch nicht auf dieses beschränkt.

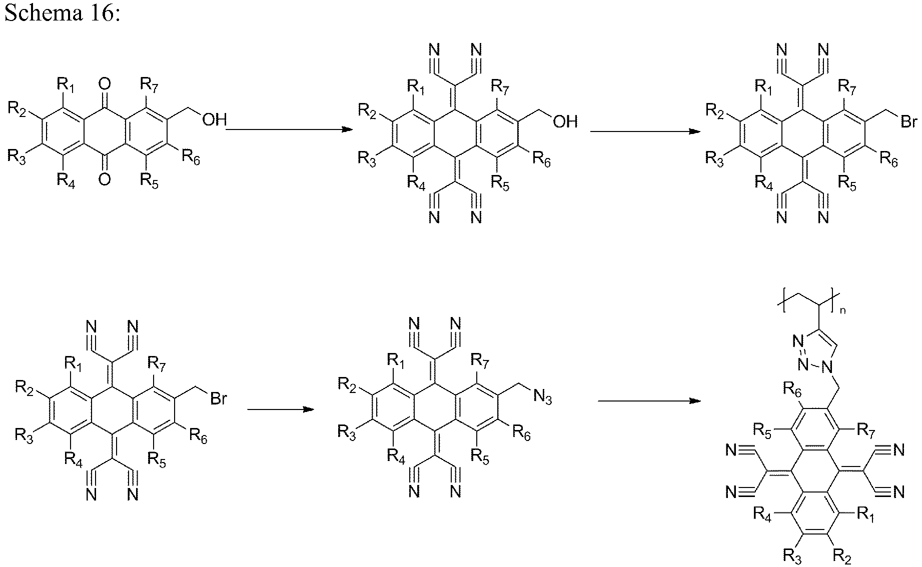

Die Verbindung der Formel I kann außerdem durch Reaktion der Verbindung I"" mit der Verbindung P'" nach einer bekannten Methode der Azid/Alkin Click-Reaktion und deren Abwandlungen synthetisiert werden. Bevorzugt wird die oben genannte Verbindung I in einem Temperaturbereich von -78 bis 150 °C, vorteilhaft in einem Temperaturbereich von -40 bis 120 °C, in einem Lösungsmittel und in einer Reaktionszeit von 0,1 bis 100 Stunden synthetisiert. Für verwendete Lösungsmittel bestehen kaum Einschränkungen. Bevorzugt sind aprotische organische Lösungsmittel, wie beispielsweise N,N'-Dimethylformamid, N,N'-Dimethylacetamid, Dimethylsulfoxid, N-Methylpyrrolidin, Dichlormethan, 1,2-Dichlorethan, Toluol, Xylol, Chlorbenzol oder o-Dichlorbenzol.

Die oligomeren oder polymeren Verbindungen dieser Erfindung können zweckmäßig als redoxaktives Material zur Speicherung elektrischer Energie in einem elektrischen Ladungsspeicher verwendet werden.

Ein redoxaktives Material zur Speicherung elektrischer Energie ist ein Material, welches elektrische Ladung beispielsweise durch Aufnahme bzw. Abgabe von Elektronen speichern und wieder abgeben kann. Dieses Material kann beispielsweise als aktives Elektrodenmaterial in einem elektrischen Ladungsspeicher eingesetzt werden. Solche elektrischen Ladungsspeicher zur Speicherung elektrischer Energie sind z. B. Sekundärbatterien (Akkumulatoren), Redox-Flowbatterien und Superkondensatoren.

Eine sekundäre Batterie besteht aus einer negativen und einer positiven Elektrode, die durch einen Separator voneinander getrennt werden, sowie einem Elektrolyt, welche die Elektroden und den Separator umschließt.

Der Separator ist eine poröse Schicht, die den Ladungsausgleich zulässt, indem sie ionendurchlässig ist. Der Elektrolyt ist entweder ein Lösungsmittel, in dem ein Salz gelöst ist, oder eine oligomere oder polymere ionenleitende Verbindung. Die Hauptaufgabe des Elektrolyten ist die Ionenleitfähigkeit, die zum Ladungsausgleich nötig ist.

Eine Elektrode kann aus einer dünnen Schicht auf einem Substrat bestehen, welche sich aus einem Komposit, enthaltend zumindest ein Leitfähigkeitsadditiv, wenigstens ein Bindeadditiv sowie ein redoxaktives Material zur Ladungsspeicherung, welches die oligomere oder polymere Verbindung der erfindungsgemäßen allgemeinen Formel I sein kann, zusammensetzt. Dieses Komposit wird mit Hilfe eines Elektrodenslurrys auf einem Substrat aufgebracht.

Die besagte Schicht auf dem Substrat wird beispielsweise durch Anwendung einer bekannten Methode zur Filmbildung und deren Abwandlungen gebildet werden, bevorzugt durch verschiedene Druckverfahren, wie Offsetdruck, Siebdruck, Injektdruck, sowie durch eine Dipcoatingmethode, oder eine Aufschleudermethode, wobei die Schicht, welche die oligomere oder polymere Verbindung der erfindungsgemäßen allgemeinen Formel I beinhaltet, mit Hilfe eines Elektrodenslurry prozessiert wird. Dabei können die oligomere oder polymere Verbindung der Erfindung, das Leitfähigkeitsadditiv sowie das Bindeadditiv in einem Lösungsmittel suspendiert oder gelöst sein. Die Dicke der obengenannten Schicht, welche die oligomere oder polymere Verbindung dieser Erfindung enthält, ist nicht limitiert, beträgt aber bevorzugt zwischen 0,001 bis 5000 µm, besonders bevorzugt zwischen 0,01 und 1000 µm.

Als Substrat der oben genannten Elektrode werden Schichten von leitfähigen Materialien, bevorzugt Metalle, wie Platin, Gold, Eisen, Kupfer, Aluminium, Lithium oder eine Kombination aus diesen Metallen, sowie Kohlenstoffinaterialien, wie beispielsweise Glaskohlenstoff, Graphitfolie, Graphene oder Kohlenstofffelle, sowie Oxidsubstanzen, wie beispielsweise Indiumzinnoxid (ITO), Indiumzinkoxid (IZO), Antimonzinkoxid (AZO), Fluorzinnoxid (FTO) oder Antimonzinnoxid (ATO), verwendet.

Als Leitfähigkeitsadditiv für die Schicht finden unabhängig voneinander ein oder mehrere elektrisch leitende Materialien, bevorzugt Kohlenstoffmaterialen, wie beispielsweise Kohlenstofffasern, Kohlenstoffnanoröhren, Graphit, Ruß oder Graphene, sowie elektrisch leitende Polymere, wie beispielsweise Polyaniline, Polythiophene, Polyacetylene, PEDOT:PSS oder Polyarcene, Verwendung. Besonders bevorzugt werden Kohlenstofffasern verwendet.

Als Bindeadditive für das Substrat können unabhängig voneinander ein oder mehrere Materialien mit Bindeeigenschaften, bevorzugt Polymere, wie beispielsweise Polytetrafluoroethylen, Polyvinylidenefluorid, Polyhexafluoropropylen, Polyvinylchlorid, Polycarbonat, Polystyrol, Polyacrylate, Polymethacrylate, Polysulfone, Cellulosederivate, sowie Polyurethane eingesetzt werden.

Der Elektrodenslurry ist eine Lösung oder eine Suspension, bestehend aus beliebigen Anteilen an einem redoxaktiven Material zur Speicherung elektrischer Energie, wie beispielsweise die oligomere oder polymere Verbindung dieser Erfindung gemäß Formel I, einem Leitfähigkeitsadditiv und einem Bindeadditiv. Bevorzugt werden Anteile von 5 bis 100 Gewichtsprozent an einem redoxaktives Material zur Speicherung elektrischer Energie, 0 bis 80 Gewichtsprozent eines Leitfähigkeitsadditives und 0 bis 10 Gewichtsprozent eines Bindeadditives verwendet. Als Lösungsmittel für den Elektrodenslurry werden unabhängig voneinander ein oder mehrere Lösungsmittel, bevorzugt Lösungsmittel mit hohem Siedepunkt, wie beispielsweise N-Methyl-2-pyrrolidon, Wasser, Dimethylsulfoxid, Ethylencarbonat, Propylencarbonat, Dimethylcarbonat, Methylethylcarbonat, gamma-Butyrolacton, Tetrahydrofuran, Dioxolan, Sulfolan, N,N'-Dimethylformamid oder N,N'-Dimethylacetamid, verwendet. Die Konzentration des redoxaktiven Materials zur Speicherung elektrischer Energie im oben genannten Elektrodenslurry beträgt bevorzugt zwischen 0,1 und 10 mg/ml, besonders bevorzugt zwischen 0,5 und 5 mg/ml.

Die oligomeren oder polymeren Verbindungen dieser Erfindung gemäß allgemeiner Formel I können, je nach eingesetzter Gegenelektrode, als aktives Material zur elektrischen Ladungsspeicherung sowohl für die negative Elektrode oder für die positive Elektrode eingesetzt werden.

Wird die oligomere oder polymere Verbindung dieser Erfindung gemäß Formel I als redoxaktives Material zur elektrischen Ladungsspeicherung in der positiven Elektrode eingesetzt, so wird als redoxaktives Material zur elektrischen Ladungsspeicherung in der negativen Elektrode ein aktives Material verwendet, welches eine Redoxreaktion bei einem niedrigeren elektrochemischen Potential als die oligomere oder polymere Verbindung dieser Erfindung gemäß Formel I zeigt. Bevorzugt finden dabei Kohlenstoffinaterialien, wie beispielsweise Graphit, Graphene, Ruß, Kohlenstofffasern oder Kohlenstoffnanoröhren, sowie Metalle oder Legierungen, beispielsweise Lithium, Natrium, Magnesium, Lithium-Aluminium, Li-Si, Li-Sn, Li-Ti, Si, SiO, SiO₂, Si-SiO₂-Komplex, Zn, Sn, SnO, SnO₂, PbO, PbO₂, GeO, GeO₂, WO₂, MoO₂, Fe₂O₃, Nb₂O₅, TiO₂, Li₄Ti₅O₁₂, und Li₂Ti₃O₇, Anwendung.

Wird die oligomere oder polymere Verbindung dieser Erfindung gemäß Formel I als redoxaktives Material zur elektrischen Ladungsspeicherung in der negativen Elektrode eingesetzt, so wird als redoxaktives Material zur elektrischen Ladungsspeicherung in der positiven Elektrode, ein aktives Material verwendet, welches eine Redoxreaktion bei einem höherem elektrochemischen Potential als die oligomere oder polymere Verbindung dieser Erfindung gemäß Formel I zeigt. Bevorzugt wird dabei organisches redoxaktives Material zur elektrischen Ladungsspeicherung verwendet, wie beispielsweise eine oligomere oder polymere Verbindung mit einem stabilen organischen Radikal, eine oligomere oder polymere Verbindung mit einer Organoschwefeleinheit, eine oligomere oder polymere Verbindung mit einer Chinonstruktur, eine oligomere oder polymere Verbindung mit einem Dionsystem, eine oligomere oder polymere Verbindung mit einer Disulfidverbindung sowie eine oligomere oder polymere Verbindung mit einer Phenantrenstruktur und deren Derivate oder redoxaktives anorganisches Material zur Ladungsspeicherung, wie beispielsweise, LiCO₂, LiMn₂O₄, LiNiO₂, LiNi_{0,5}Mn_{0,5}O₂, LiFePO₄, LiMnO₄, LiCoPO₄, oder LiMnSiO₄, verwendet. Wird in der positiven Elektrode eine oben genannte redoxaktive oligomere oder polymere Verbindung eingesetzt, so kann diese Verbindung auch ein Komposit sein, bestehend aus dieser oligomeren oder polymeren Verbindung, einem Leitfähigkeitsadditiv und einem Bindeadditiv in einem beliebigen Verhältnis. Dieses Komposit kann wie oben beschrieben mit Hilfe eines Elektrodenslurrys durch ein bekanntes Verfahren zur Filmbildung als Schicht auf einem Substrat vorliegen.

Als redoxaktives Material zur Ladungsspeicherung kann auch Luft/Sauerstoff verwendet werden. In diesem Fall kann die positive Elektrode aus einem Leitfähigkeitsadditiv, einem Bindeadditiv und aus einem Redoxkatalysator bestehen. Bevorzugt werden als Redoxkatalysatoren ein anorganisches redoxaktives Material, wie beispielsweise Manganoxid, oder ein redoxaktives organisches Material, wie beispielsweise ein organisches Radikal, verwendet.

Als oben genannter Separator der besagten sekundären Batterie wird ein poröses Material, bevorzugt Membran bestehend aus einer polymeren Verbindung, wie beispielsweise Polyolefin, Polyamid, oder Polyester, verwendet. Die Aufgabe des Separators besteht darin, die positive Elektrode von der negativen Elektrode zu trennen und den Ladungsausgleich durch Permutation von Ionen zu ermöglichen.

Der oben genannte Elektrolyt der besagten Batterie kann sowohl eine Flüssigkeit, als auch eine oligomere oder polymere Verbindung mit hoher Ionenleitfähigkeit sein.
Ist der Elektrolyt flüssig, so setzt er sich unabhängig voneinander aus einem oder mehreren Lösungsmitteln und einem oder mehreren Leitsalzen zusammen.

Das Lösungsmittel der Elektrolyten besteht bevorzugt unabhängig voneinander aus einem oder mehreren Lösungsmitteln mit hohem Siedepunkt und hoher Ionenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, gamma-Butyrolacton, Tetrahydrofuran, Dioxolan, 1,2-Dimethoxyethan, 1,2-Diethoxyethan, Digylme, Triglyme, Tetraglyme, Ethylacetat, 1,3-Dioxolan oder Wasser.

Das Leitsalz des Elektrolyten besteht aus einem Kation der Formel M^{e+} und einem Anion oder Formel An^{f-} der Formel (M^{e+})ₐ(An^{f-})_{b}, wobei e und f Ganzzahlen in Abhängigkeit der Ladung von M und An sind; a und b sind Ganzzahlen, welche die molekulare Zusammensetzung des Leitsalzes repräsentieren.

Als Kation des oben genannten Leitsalzes werden positiv geladene Ionen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise N(CF₃SO₂)₂⁻, CF₃SO₃⁻, Alkoholate, wie beispielsweise, tert-Butanolat, oder i-Propylalkoholat aber auch Halogenide, wie Fluorid, Chlorid, Bromid sowie Iodid, verwendet.

Die Erfindung soll nachstehend anhand von in der Zeichnung dargestellten Ausführungsbeispielen zur Herstellung und Verwendung näher erläutert werden.
Es zeigen:
- Abb. 1:: Cyclovoltammogramme eines Monomers, hergestellt gemäß Beispiel 2, (gestrichelte Linie) sowie einer daraus gemäß Beispiel 4 hergestellten Elektrode (durchgezogene Linie)
- Abb. 2:: Lade/Entladekurven des ersten (durchzogene Linie) und des fünfhundertsten (gestrichelte Linie) Lade/Entladezyklus einer sekundären Batterie, hergestellt gemäß Beispiel 5
- Abb. 3:: Lade/Entladeverhalten der sekundären Batterie, hergestellt gemäß Beispiel 5
- Abb. 4:: Coulombsche Effizienz der sekundären Batterie, hergestellt gemäß Beispiel 5

¹H and ¹³C NMR Spektren wurden mit einem Bruker AC 300 (300 MHz) Spectrometer bei 298 K aufgenommen. Elementaranalysen wurden mit einem Vario ELIII-Elementar Euro Gerät sowie einem EA-HekaTech Gerät durchgeführt. Für Cyclovoltammetrie und galvinostatische Experimente stand ein Biologic VMP 3 Potentiostanten zur Verfügung. Größenausschlusschromatorgraphie wurde an einem Agilent 1200 series System (Entgaser: PSS, Pumpe: G1310A, Autosampler: G1329A, Oven: Techlab, DAD Detector: G1315D, RI Detector: G1362A, Eluent: DMAc + 0.21% LiCl, 1 mL/min, Temperatur: 40 °C, Säule: PSS GRAM guard/1000/30 Å) durchgeführt.

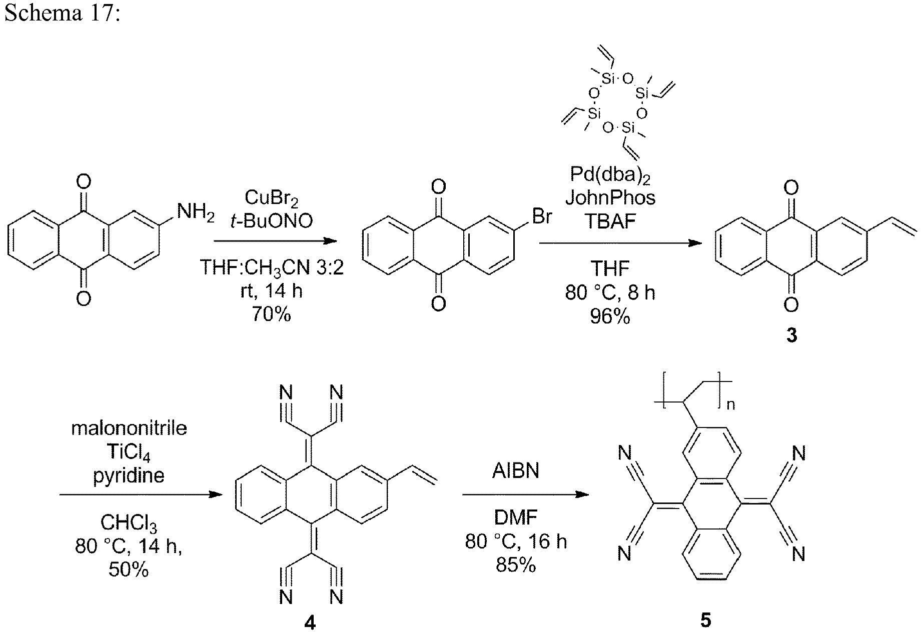

### Beispiel 1:

Synthese von 2-Vinylanthrachinon (**3**):
2-Bromoanthrachinon (1.5 g, 5.22 mmol), Bis(dibenzylideneacetone)palladium(0) (0.060 g, 0.104 mmol), Biphenyl-2-yldi-tert-butylphosphin (0.062 g, 0.209 mmol), werden in einer 0.3 M Lösung von Tetrabutylammoniumfluorid in Tetrahydrofuran gelöst. Die Lösung wird mit Argon gespült und 2,4,6,8-Tetramethyl-2,4,6,8-tetravinyl-1,3,5,7,2,4,6,8-tetraoxatetrasilocane (0.902 ml, 2.61 mmol) wird tropfenweise hinzugegeben. Die Mischung wird 8 Stunden unter Argonatmosphäre bei 80 °C gerührt. Die Reaktionsmischung wird auf Raumtemperatur abgekühlt und in 250 ml Ethanol gegeben. Der Niederschlag wird abfiltriert und zweimal mit n-Hexan gewaschen. Nach der Trocknung im Vakuum wird fast reines 2-Vinylanthrachinon (**3**) (1.175 g, 5.02 mmol, 96%) als gelblicher Feststoff, dessen Reinheit für den nächsten Reaktionsschritt ausreichend ist, erhalten.

Anal. Calcd for C₁₆H₁₀O₂: C, 81.90; H, 4.30. Found: C, 81.85; H, 4.31. ¹H NMR (CDCl₃, 300 MHz, ppm): δ 5.54 (d, 1H), 6.05 (d, 1H), 6.87 (dd, 1H), 7.80 (m, 3H), 8.32 (m, 4H). ¹³C NMR (CDCl₃, 75 MHz, ppm): δ 183.2, 182.6, 143.2, 135.4, 134.1, 134.0, 133.8, 133.6, 133.5, 132.5,131.4, 128.3, 127.8, 127.2, 124.8, 118.4.

### Beispiel 2:

Synthese von 2-Vinyl-11,11,12,12-tetracyanoanthrachinonedimethan (**4**):
2-Vinylanthrachinon (1 g, 4.27 mmol) und Malononitril (0.85 g, 0.81 ml, 12.81 mmol) werden in 71 ml Chloroform gelöst. Pyridin (2.07 ml, 25.6 mmol) und Titaniumtetrachlorid (1.41 ml, 12.81 mmol) werden innerhalb von fünf Minuten tropfenweise zur Reaktionsmischung hinzugefügt. Die Mischung wird unter Argon 15 Stunden bei 80 °C gerührt, auf Raumtemperatur abgekühlt und zweimal mit Wasser und einmal mit Brine extrahiert. Die organische Phase wird mit Natriumsulfat getrocknet, das Trockenmittel wird abfiltriert und die organische Phase unter verminderten Druck aufkonzentriert. Das Rohprodukt wird durch Säulenchromatographie aufgereinigt (Kieselgel, Chloroform). Dabei werden 700 mg 2-Vinyl-11,11,12,12-tetracyanoanthrachinondimethan (**4**) (2.12 mmol, 50%) als gelbes Pulver erhalten.

Anal. Calcd for C₂₂H₁₀N₄: C, 80.00; H, 3.10, N, 16.90. Found: C, 79.94; H, 3.08, N 16.91. ¹H NMR (CD₂Cl₂, 300 MHz, ppm): δ 5.61 (d, 1H), 6.06 (d, 1H), 6.88 (dd, 1H), 7.77 (m, 3H), 8.27 (m, 4H).¹³C NMR (CD₂Cl₂, 75 MHz, ppm): δ 160.5, 160.0, 141.8, 134.5, 132.4, 130.8, 130.4, 130.2, 129.7, 129.0,128.01, 127.5, 124.93, 119.3, 113.3, 113.1.

### Beispiel 3:

Synthese von Poly(2-vinyl-11,11,12,12-tetracyanoanthrachinonedimethan) (**5**):
50 mg 2-Vinyl-11,11,12,12-tetracyanoanthrachinonedimethan (**4**) werden in 0.150 ml N,N'-Dimethylformamid gelöst und mit 1.24 mg AIBN (0.0076 mmol, 5 mol%) versetzt. Die Reaktionsmischung wird fünf Minuten lang mit Argon entgast und 18 Stunden bei 80 °C gerührt. Danach wird die Reaktionslösung in 50 ml Dichlormethan gegeben, um das Produkt auszufällen. Dabei entstehen 42 mg Poly(2-vinyl-11,11,12,12-tetracyanoanthrachinonedimethan) (**5**) als gelber Feststoff.

Anal. Calcd for C₂₂H₁₀N₄: C, 80.00; H, 3.10, N, 16.90. Found: C, 79.96; H, 3.13, N 16.95. ¹H NMR (DMF-d₇, 300 MHz, ppm): δ 8.83 to 7.48 (br, 7H), 2.62 to 1.31 (br, 3H). SEC: Mₙ 2,67x10⁴ g/mol, PDI: 1,87.

### Beispiel 4:

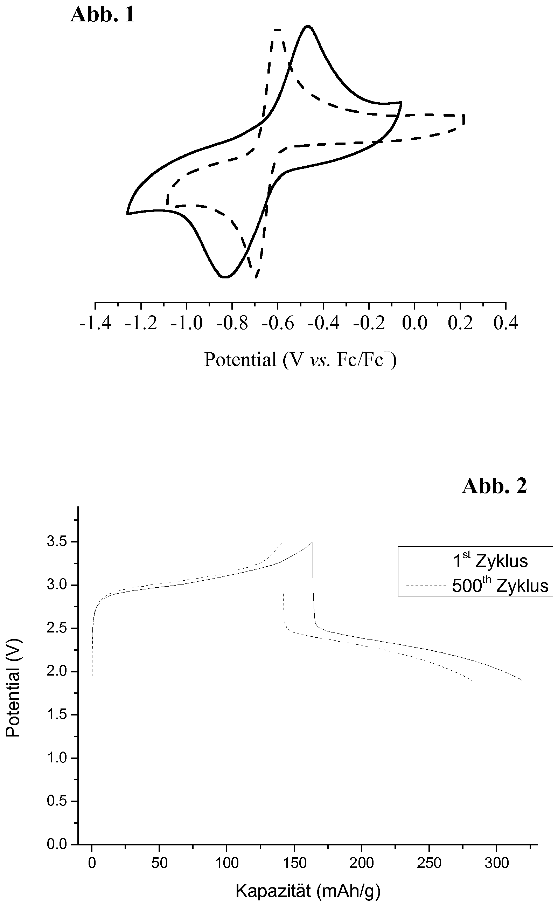

Herstellung einer Elektrode mit Poly(2-vinyl-11,11,12,12-tetracyanoanthrachinonedimethan) (**5**), vgl. Abb. 1:
Eine Lösung bestehend aus Poly(2-vinyl-11,11,12,12-tetracyanoanthrachinonedimethan) (**5**) in NMP (N-methyl-2-pyrrolidon) (10 mg/ml) wurde zu Kohlenstofffasern (VGCF; Showa-Denko) und Super P® als Leitaddive und Poly(vinylidenefluoride) (PVDF; Sigma Aldrich als Bindeadditiv (ratio: 20/30/30/10 wt %) hinzugefügt. Diese Materialien wurden in einem Mörser 10 Minuten lang durchmischt und die dabei erhaltene Paste wurde unter Anwendung einer Streichmessermethode auf eine Aluminiumfolie (Dicke: 0.015 mm, MTI Corporation) aufgebracht. Die Elektrode wird bei 100 °C 24 Stunden lang getrocknet.

Die Elektrode wird in eine Elektrolytlösung (0,1 M LiClO₄ in Propylencarbonat) eingetaucht. Für die cylcovoltammographische Messung wird eine Halbzelle, bestehend aus der besagten Elektrode als Arbeitselektrode und einer Ag/AgNO₃-Elektrode als Referenzelektrode sowie einem Platinnetz als Gegenelektrode, aufgebaut. (Abb. 1)
Das Cyclovoltammogramm zeigt eine stabile Redoxreaktion bei -0,71 V.

### Beispiel 5:

Herstellung einer Li-Polymerbatterie:
Die in Beispiel 4 beschriebene Elektrode wird unter Argonatmosphäre in eine sekundäre Batterie (Li-Polymerbatterie) eingebracht. Als Elektrolyt dient eine 0,1 M Lösung aus LiClO₄ in Propylencarbonat, als Gegenelektrode dient ein Stück elemtares Lithium. Die beiden Elektroden werden durch den Separator (eine poröse Polypropylenmembran, Celgard) voneinander getrennt. Die Batterie zeigt ein Ladeplateau bei 2,9 V und ein Entladeplateau bei 2,4 V. (Abb. 2)

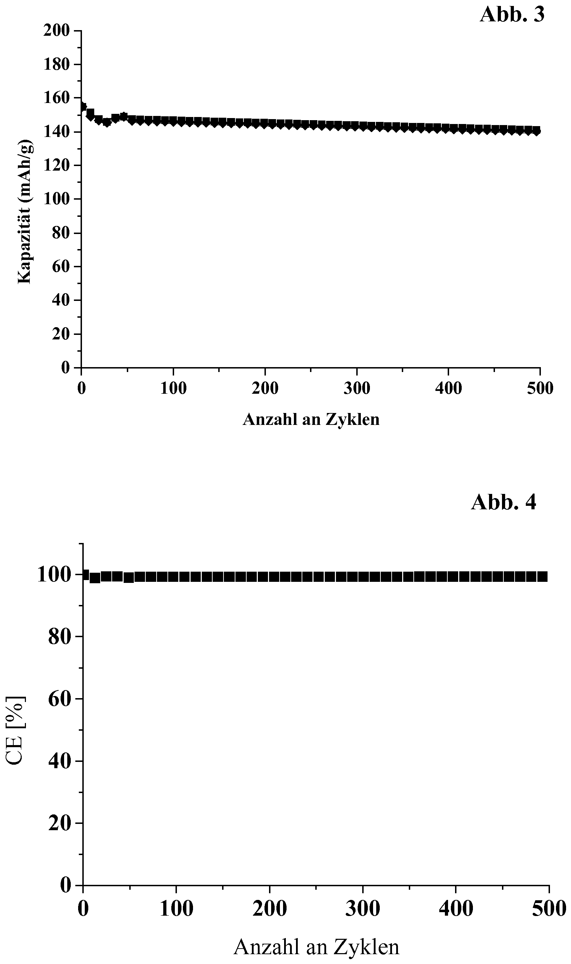

Im ersten Lade/Entladezyklus zeigt die Batterie eine Kapazität von 156 mAh/g (97% der theoretisch möglichen Kapazität), nach 500 Lade/Entladezyklen zeigt die Batterie eine Kapazität von 141 mAh/g,(Abb. 3) bei einer durchschnittlichen Coulombeffizienz von 99%. (Abb. 4)

## Patentansprüche

1. Tetracyanoanthraquinonedimethanpolymere, bestehend aus einer oligomeren oder polymeren Verbindung der allgemeinen Formel I 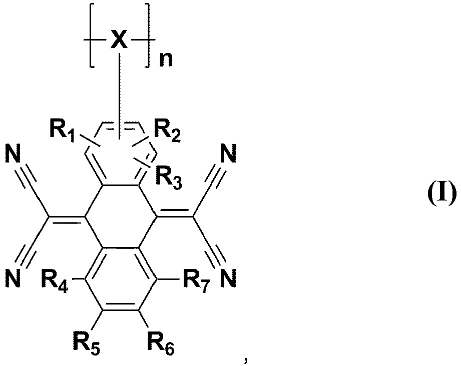 wobei
R₁ bis R₇: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei Wasserstoffatome als mindestens fünf der Substituenten R₁ bis R₇ und Nicht-Wasserstoffatome, vorzugsweise Halogenatome, Alkylgruppen, Alkoxygruppen, Cyanogruppen und/oder Nitrogruppen, als null bis zwei der Substituenten R₁ bis R₇ besonders bevorzugt sind,
X: eine organische Gruppe ist, welche durch Polymerisationreaktion aus einer Gruppe gebildet wird, die aus einer organischen Doppelbindung, einer organischen Dreifachbindung, eines Oxirans oder eines Aziridins besteht, oder eine organische Gruppe ist, welche durch eine polymeranaloge Reaktion gebildet wird,
n: eine Ganzzahl größer gleich 2 ist.

2. Tetracyanoanthrachinondimethanpolymere gemäß Anspruch 1 **dadurch gekennzeichnet, dass** X eine organische Gruppe einer der allgemeinen Formeln II - XIV darstellt. 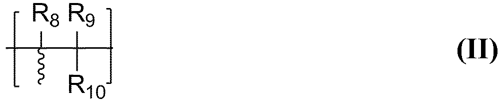 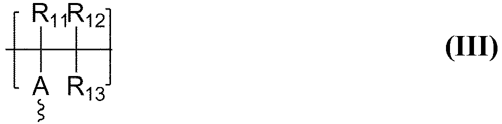 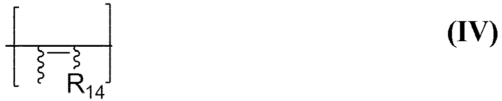 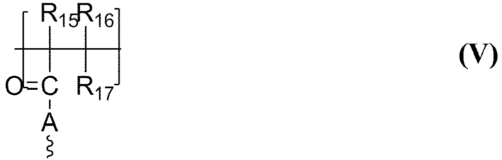 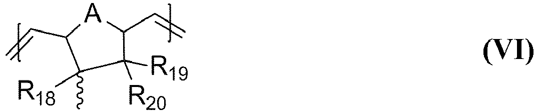 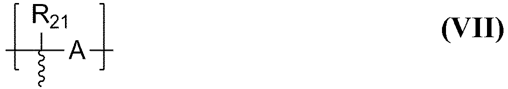 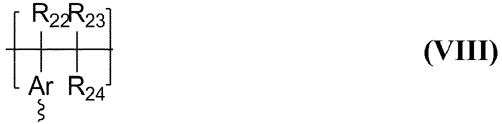 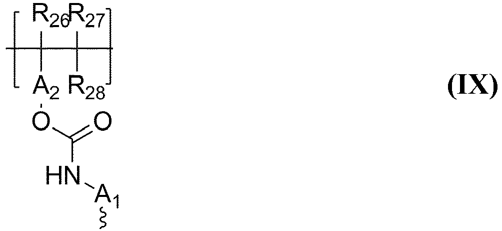 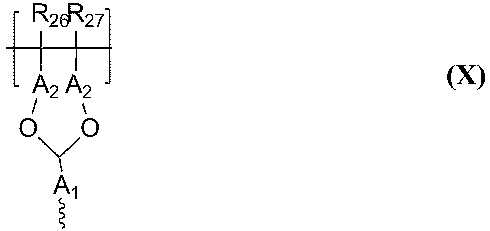 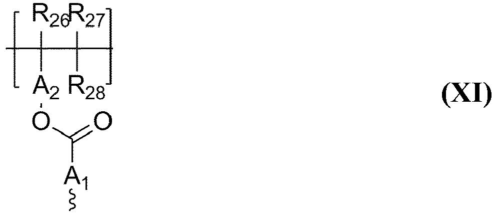 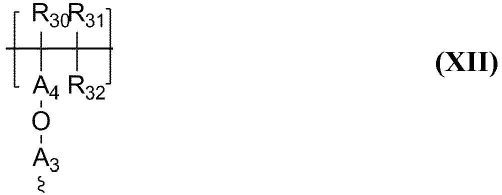 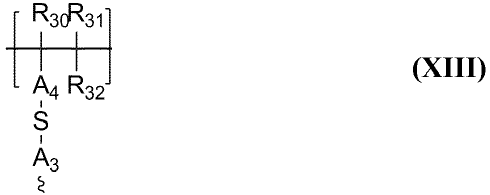 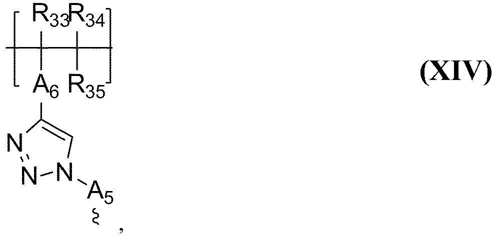 wobei
R₈ bis R₂₄: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbon-säuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei
Wasserstoffatome als mindestens zwei der Substituenten R₈ bis R₁₀ und Nicht-Wasserstoffatome, vorzugsweise Halogenatome, Alkylgruppen, Alkoxygruppen, Cyanogruppen und/oder Nitrogruppen, als null bis zwei der Substituenten R₈ bis R₁₀ und/oder
Wasserstoffatome als mindestens zwei der Substituenten R₁₁ bis R₁₃ und Nicht-Wasserstoffatome, vorzugsweise Halogenatome, Alkylgrupen, Alkoxygruppen, Cyanogruppen und/oder Nitrogruppen, als null bis einem der Substituenten R₁₁ bis R₁₃ und/oder
ein Wasserstoffatom als R₁₄, und/oder
Wasserstoffatome als mindestens zwei der Substituenten R₁₅ bis R₁₇ und Nicht-Wasserstoffatome, vorzugsweise Halogenatome, Alkylgruppen, Alkoxygruppen, Cyanogruppen und/oder Nitrogruppen, als null bis einem der Substituenten R₁₅ bis R₁₇, und/oder
Wasserstoffatome als mindestens zwei der Substituenten R₁₈ bis R₂₀ und Nicht-Wasserstoffatome, vorzugsweise Halogenatome, Alkylgruppen, Alkoxygruppen, Cyanogruppen und/oder Nitrogruppen, als null bis einem der Substituenten R₁₈ bis R₂₀ und/oder
ein Wasserstoffatom als R₂₁ und/oder
Wasserstoffatome als mindestens zwei der Substituenten R₂₂ bis R₂₄ und Nicht-Wasserstoffatome, vorzugsweise Halogenatome, Alkylgruppen, Alkoxygruppen, Cyanogruppen und/oder Nitrogruppen, als null bis einem der Substituenten R₂₂ bis R₂₄ besonders bevorzugt sind,
R₂₆ bis R₂₈: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können, wobei Wasserstoffatome als mindestens zwei der Substituenten R₂₆ bis R₂₈ und Nicht-Wasserstoffatome, vorzugsweise Halogenatome, Alkylgruppen, Alkoxygruppen, Cyanogruppen und/oder Nitrogruppen, als null bis einem der Substituenten R₂₆ bis R₂₈ besonders bevorzugt sind,
R₃₀ bis R₃₂: unabhängig voneinander bevorzugt Wasserstoffatome, Alkylgruppen, Alkenylgruppen, Alkinylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Halogenatome oder eine Kombination dieser Gruppen oder Atome darstellen können, wobei Wasserstoffatome als mindestens zwei der Substituenten R₃₀ bis R₃₂, und Nicht-Wasserstoffatome, vorzugsweise Halogenatome, Alkylgruppen, Alkoxygruppen, Cyanogruppen und/oder Nitrogruppen, als null bis einem der Substituenten R₃₀ bis R₃₂ besonders bevorzugt sind,
R₃₃ bis R₃₅: unabhängig voneinander bevorzugt Wasserstoffatome, Alkylgruppen, Alkenylgruppen, Alkoxygruppen, Alkylthiogruppen, Haloalkylgruppen, Haloalkoxygruppen, Cycloalkylgruppen, Cycloalkoxygruppen, Arylgruppen, Heteroarylgruppen, Aryloxygruppen, Aralkylgruppen, Carbonsäuregruppen, Sulfonsäuregruppen, Aminogruppen, Monoalkylaminogruppen, Dialkylaminogruppen, Nitrogruppen, Cyanogruppen, Hydroxylgruppen, Alkylcarbonylgruppen, Alkenylcarbonylgruppen, Alkinylcarbonylgruppen, Carbonsäureestergruppen, Carbonsäureamidgruppen, Sulfonsäureestergruppen, Thiolgruppen, Halogenatome oder eine Kombination dieser Gruppen oder Atome darstellen können wobei Wasserstoffatome als mindestens zwei der Substituenten R₃₃ bis R₃₅ und Nicht-Wasserstoffatome, vorzugsweise Halogenatome, Alkylgruppen, Alkoxygruppen, Cyanogruppen und/oder Nitrogruppen, als null bis einem der Substituenten R₃₃ bis R₃₅ besonders bevorzugt sind,
A: ein Sauerstoffatom, ein Schwefelatom oder eine -N(R₂₉)- Gruppe ist, wobei R₂₉ bevorzugt ein Wasserstoffatom, Alkylgruppe, Alkenylgruppe, Alkinylgruppe, Alkoxygruppe, Alkylthiogruppe, Haloalkylgruppe, Haloalkoxygruppe, Cycloalkylgruppe, Cycloalkoxygruppe, Arylgruppe, Heteroarylgruppe, Aryloxygruppe, Aralkylgruppe, Carbonsäuregruppe, Sulfonsäuregruppe, Nitrogruppe, Alkylcarbonylgruppe, Alkenylcarbonylgruppe, Alkinylcarbonylgruppe, Carbonsäureestergruppe, Carbonsäureamidgruppe, Sulfonsäureestergruppe ist, wobei ein Sauerstoffatom als A besonders bevorzugt ist,
A₁ und A₂: unabhängig voneinander bevorzugt eine kovalente Bindung, eine Alkylgruppe, eine Alkenylgruppe, eine Alkinylgruppe, eine Alkoxygruppe, eine Alkylthiogruppe, eine Haloalkylgruppe, eine Haloalkoxygruppe, eine Cycloalkylgruppe, eine Cycloalkoxygruppe, eine Arylgruppe, eine Heteroarylgruppe, eine Aryloxygruppe, eine Aralkylgruppe, eine Monoalkylaminogruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sind, wobei eine kovalente Bindung oder eine Alkylgruppe als A₁ und A₂ besonders bevorzugt ist,
A₃ und A₄: unabhängig voneinander bevorzugt eine kovalente Bindung, eine Alkylgruppe, eine Alkenylgruppe, eine Alkinylgruppe, eine Alkoxygruppe, eine Alkylthiogruppe, eine Cycloalkylgruppe, eine Cycloalkoxygruppe, eine Arylgruppe, eine Heteroarylgruppe, eine Aryloxygruppe, eine Aralkylgruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sein können, wobei eine kovalente Bindung oder eine Alkylgruppe als A₁ und A₂ besonders bevorzugt ist,
A₅ und A₆: unabhängig voneinander bevorzugt eine kovalente Bindung, eine Alkylgruppe, eine Alkenylgruppe, eine Alkoxygruppe, eine Alkylthiogruppe, eine Haloalkylgruppe, eine Haloalkoxygruppe, eine Cycloalkylgruppe, eine Cycloalkoxygruppe, eine Arylgruppe, eine Heteroarylgruppe, eine Aryloxygruppe, eine Aralkylgruppe, eine Monoalkylaminogruppe, eine Dialkylaminogruppe, eine Alkylcarbonylgruppe, eine Alkenylcarbonylgruppe, eine Alkinylcarbonylgruppe, eine Carbonsäureestergruppe, eine Carbonsäureamidgruppe, eine Sulfonsäureestergruppe sein können, wobei eine kovalente Bindung, eine Arylgruppe oder eine Alkylgruppe als A₅ und A₆ besonders bevorzugt sind,
Ar: einer unabhängig voneinander substituierten Cycloalkylgruppe, Cyclo-alkoxygruppe, Arylgruppe, Heteroarylgruppe, Aryloxygruppe, Aralkylgruppe entspricht.

3. Verwendung der Tetracyanoanthrachinondimethanpolymere gemäß einem oder beiden der Ansprüche 1 und 2 als aktives Elektrodenmaterial für elektrische Ladungsspeicher, insbesondere Sekundärbatterien.

4. Verwendung der Tetracyanoanthrachinondimethanpolymere gemäß Anspruch 3, wobei das aktive Elektrodenmaterial als vollständige oder teilweise Oberflächenbeschichtung von Elektrodenelementen für elektrische Ladungsspeicher, insbesondere Sekundärbatterien, ausgebildet ist.

5. Verwendung der Tetracyanoanthrachinondimethanpolymere gemäß einem oder beiden der Ansprüche 1 und 2 als Elektrodenslurry für elektrische Ladungsspeicher, insbesondere Sekundärbatterien.

## Claims

1. Tetracyanoanthraquinonedimethane polymers consisting of an oligomeric or polymeric compound of the general formula I 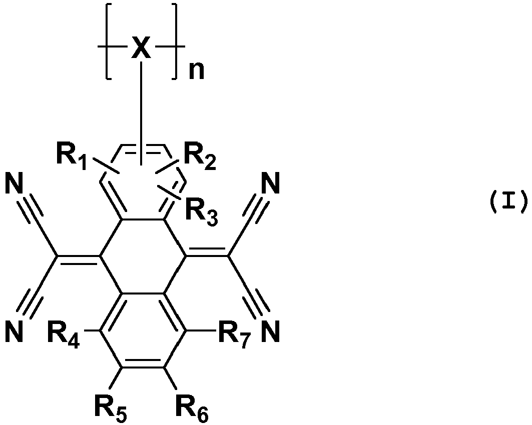 where
R₁ to R₇: may preferably each independently be hydrogen atoms, alkyl groups, alkenyl groups, alkynyl groups, alkoxy groups, alkylthio groups, haloalkyl groups, haloalkoxy groups, cycloalkyl groups, cycloalkoxy groups, aryl groups, heteroaryl groups, aryloxy groups, aralkyl groups, carboxylic acid groups, sulphonic acid groups, amino groups, monoalkylamino groups, dialkylamino groups, nitro groups, cyano groups, hydroxyl groups, alkylcarbonyl groups, alkenylcarbonyl groups, alkynylcarbonyl groups, carboxylic ester groups, carboxamide groups, sulphonic ester groups, thiol groups, halogen atoms or a combination of these groups or atoms, particular preference being given to hydrogen atoms as at least five of the R₁ to R₇ substituents and to non-hydrogen atoms, preferably halogen atoms, alkyl groups, alkoxy groups, cyano groups and/or nitro groups, as zero to two of the R₁ to R₇ substituents,
X: is an organic group which is formed by polymerization reaction from a group consisting of an organic double bond, an organic triple bond, an oxirane or an aziridine, or is an organic group which is formed by a polymer-analogous reaction,
n: is an integer greater than or equal to 2.

2. Tetracyanoanthraquinonedimethane polymers according to Claim 1, **characterized in that** X is an organic group of one of the general formulae II-XIV: 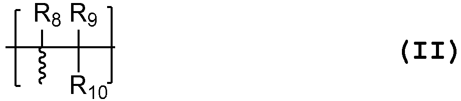 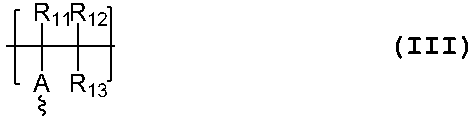 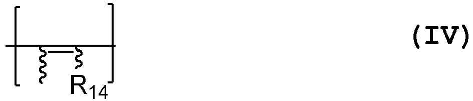 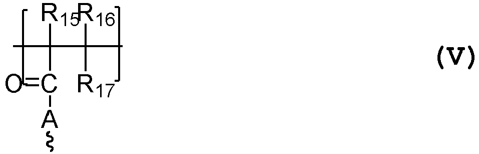 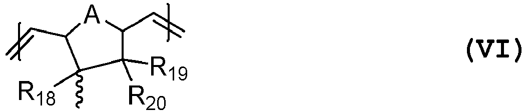 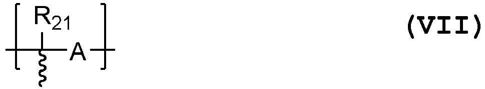 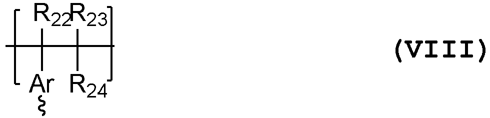 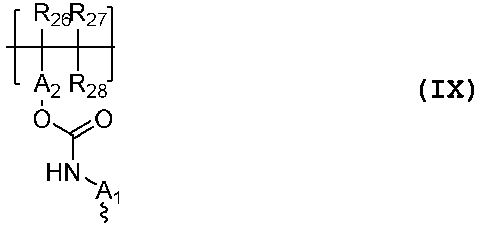 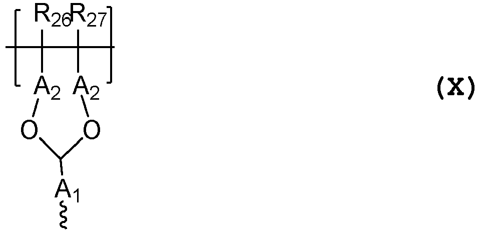 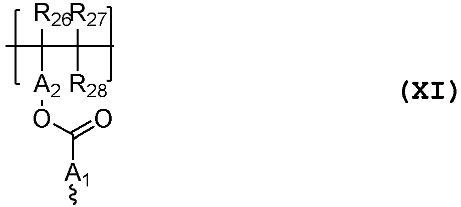 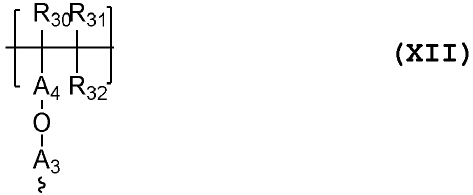 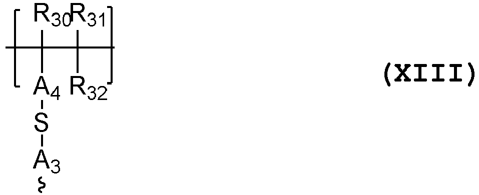 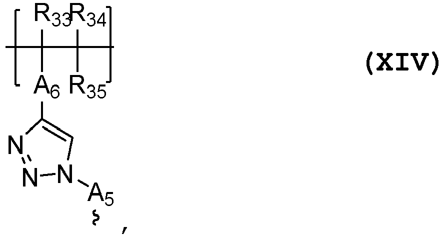 where
R₈ to R₂₄: may preferably each independently be hydrogen atoms, alkyl groups, alkenyl groups, alkynyl groups, alkoxy groups, alkylthio groups, haloalkyl groups, haloalkoxy groups, cycloalkyl groups, cycloalkoxy groups, aryl groups, heteroaryl groups, aryloxy groups, aralkyl groups, carboxylic acid groups, sulphonic acid groups, amino groups, monoalkylamino groups, dialkylamino groups, nitro groups, cyano groups, hydroxyl groups, alkylcarbonyl groups, alkenylcarbonyl groups, alkynylcarbonyl groups, carboxylic ester groups, carboxamide groups, sulphonic ester groups, thiol groups, halogen atoms or a combination of these groups or atoms, particular preference being given to hydrogen atoms as at least two of the R₈ to R₁₀ substituents and to non-hydrogen atoms, preferably halogen atoms, alkyl groups, alkoxy groups, cyano groups and/or nitro groups, as zero to two of the R₈ to R₁₀ substituents, and/or
hydrogen atoms as at least two of the R₁₁ to R₁₃ substituents and to non-hydrogen atoms, preferably halogen atoms, alkyl groups, alkoxy groups, cyano groups and/or nitro groups, as zero to one of the R₁₁ to R₁₃ substituents, and/or
a hydrogen atom as R₁₄, and/or
hydrogen atoms as at least two of the R₁₅ to R₁₇ substituents and to non-hydrogen atoms, preferably halogen atoms, alkyl groups, alkoxy groups, cyano groups and/or nitro groups, as zero to one of the R₁₅ to R₁₇ substituents, and/or
hydrogen atoms as at least two of the R₁₈ to R₂₀ substituents and to non-hydrogen atoms, preferably halogen atoms, alkyl groups, alkoxy groups, cyano groups and/or nitro groups, as zero to one of the R₁₈ to R₂₀ substituents, and/or
a hydrogen atom as R₂₁, and/or
hydrogen atoms as at least two of the R₂₂ to R₂₄ substituents and to non-hydrogen atoms, preferably halogen atoms, alkyl groups, alkoxy groups, cyano groups and/or nitro groups, as zero to one of the R₂₂ to R₂₄ substituents,
R₂₆ to R₂₈: may preferably each independently be hydrogen atoms, alkyl groups, alkenyl groups, alkynyl groups, alkoxy groups, alkylthio groups, haloalkyl groups, haloalkoxy groups, cycloalkyl groups, cycloalkoxy groups, aryl groups, heteroaryl groups, aryloxy groups, aralkyl groups, carboxylic acid groups, sulphonic acid groups, amino groups, monoalkylamino groups, dialkylamino groups, nitro groups, cyano groups, hydroxyl groups, alkylcarbonyl groups, alkenylcarbonyl groups, alkynylcarbonyl groups, carboxylic ester groups, carboxamide groups, sulphonic ester groups, thiol groups, halogen atoms or a combination of these groups or atoms, particular preference being given to hydrogen atoms as at least two of the R₂₆ to R₂₈ substituents and to non-hydrogen atoms, preferably halogen atoms, alkyl groups, alkoxy groups, cyano groups and/or nitro groups, as zero to one of the R₂₆ to R₂₈ substituents,
R₃₀ to R₃₂: may preferably each independently be hydrogen atoms, alkyl groups, alkenyl groups, alkynyl groups, alkoxy groups, alkylthio groups, haloalkyl groups, haloalkoxy groups, cycloalkyl groups, cycloalkoxy groups, aryl groups, heteroaryl groups, aryloxy groups, aralkyl groups, carboxylic acid groups, sulphonic acid groups, amino groups, monoalkylamino groups, dialkylamino groups, nitro groups, cyano groups, alkylcarbonyl groups, alkenylcarbonyl groups, alkynylcarbonyl groups, carboxylic ester groups, carboxamide groups, sulphonic ester groups, halogen atoms or a combination of these groups or atoms, particular preference being given to hydrogen atoms as at least two of the R₃₀ to R₃₂ substituents and to non-hydrogen atoms, preferably halogen atoms, alkyl groups, alkoxy groups, cyano groups and/or nitro groups, as zero to one of the R₃₀ to R₃₂ substituents,
R₃₃ to R₃₅: may preferably each independently be hydrogen atoms, alkyl groups, alkenyl groups, alkoxy groups, alkylthio groups, haloalkyl groups, haloalkoxy groups, cycloalkyl groups, cycloalkoxy groups, aryl groups, heteroaryl groups, aryloxy groups, aralkyl groups, carboxylic acid groups, sulphonic acid groups, amino groups, monoalkylamino groups, dialkylamino groups, nitro groups, cyano groups, hydroxyl groups, alkylcarbonyl groups, alkenylcarbonyl groups, alkynylcarbonyl groups, carboxylic ester groups, carboxamide groups, sulphonic ester groups, thiol groups, halogen atoms or a combination of these groups or atoms, particular preference being given to hydrogen atoms as at least two of the R₃₃ to R₃₅ substituents and to non-hydrogen atoms, preferably halogen atoms, alkyl groups, alkoxy groups, cyano groups and/or nitro groups, as zero to one of the R₃₃ to R₃₅ substituents,
A: is an oxygen atom, a sulphur atom or an -N(R₂₉)-group, where R₂₉ is preferably a hydrogen atom, alkyl group, alkenyl group, alkynyl group, alkoxy group, alkylthio group, haloalkyl group, haloalkoxy group, cycloalkyl group, cycloalkoxy group, aryl group, heteroaryl group, aryloxy group, aralkyl group, carboxylic acid group, sulphonic acid group, nitro group, alkylcarbonyl group, alkenylcarbonyl group, alkynylcarbonyl group, carboxylic ester group, carboxamide group, sulphonic ester group, particular preference being given to an oxygen atom as A,
A₁ and A₂: are preferably each independently a covalent bond, an alkyl group, an alkenyl group, an alkynyl group, an alkoxy group, an alkylthio group, a haloalkyl group, a haloalkoxy group, a cycloalkyl group, a cycloalkoxy group, an aryl group, a heteroaryl group, an aryloxy group, an aralkyl group, a monoalkylamino group, a dialkylamino group, an alkylcarbonyl group, an alkenylcarbonyl group, an alkynylcarbonyl group, a carboxylic ester group, a carboxamide group, a sulphonic ester group, particular preference being given to a covalent bond or an alkyl group as A₁ and A₂,
A₃ and A₄: may preferably each independently be a covalent bond, an alkyl group, an alkenyl group, an alkynyl group, an alkoxy group, an alkylthio group, a cycloalkyl group, a cycloalkoxy group, an aryl group, a heteroaryl group, an aryloxy group, an aralkyl group, a dialkylamino group, an alkylcarbonyl group, an alkenylcarbonyl group, an alkynylcarbonyl group, a carboxylic ester group, a carboxamide group, a sulphonic ester group, particular preference being given to a covalent bond or an alkyl group as A₁ and A₂,
A₅ and A₆: may preferably each independently be a covalent bond, an alkyl group, an alkenyl group, an alkoxy group, an alkylthio group, a haloalkyl group, a haloalkoxy group, a cycloalkyl group, a cycloalkoxy group, an aryl group, a heteroaryl group, an aryloxy group, an aralkyl group, a monoalkylamino group, a dialkylamino group, an alkylcarbonyl group, an alkenylcarbonyl group, an alkynylcarbonyl group, a carboxylic ester group, a carboxamide group, a sulphonic ester group, particular preference being given to a covalent bond, an aryl group or an alkyl group as A₅ and A₆,
Ar: is an independently substituted cycloalkyl group, cycloalkoxy group, aryl group, heteroaryl group, aryloxy group, aralkyl group.

3. Use of the tetracyanoanthraquinonedimethane polymers according to one or both of Claims 1 and 2 as active electrode material for electrical charge storage means, especially secondary batteries.

4. Use of the tetracyanoanthraquinonedimethane polymers according to Claim 3, wherein the active electrode material takes the form of a full or partial surface coating of electrode elements for electrical charge storage means, especially secondary batteries.

5. Use of the tetracyanoanthraquinonedimethane polymers according to one or both of Claims 1 and 2 as electrode slurry for electrical charge storage means, especially secondary batteries.

## Revendications

1. Polymères de tétracyanoanthraquinone-diméthane, constitués par un composé oligomère ou polymère de formule générale I 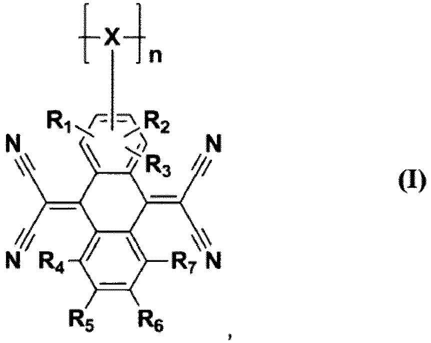 dans laquelle
R₁ à R₇ : peuvent représenter indépendamment les uns des autres de préférence des atomes d'hydrogène, des groupes alkyle, des groupes alcényle, des groupes alcynyle, des groupes alcoxy, des groupes alkylthio, des groupes haloalkyle, des groupes haloalcoxy, des groupes cycloalkyle, des groupes cycloalcoxy, des groupes aryle, des groupes hétéroaryle, des groupes aryloxy, des groupes aralkyle, des groupes acide carboxylique, des groupes acide sulfonique, des groupes amino, des groupes monoalkylamino, des groupes dialkylamino, des groupes nitro, des groupes cyano, des groupes hydroxyle, des groupes alkylcarbonyle, des groupes alcénylcarbonyle, des groupes alcynylcarbonyle, des groupes ester d'acide carboxylique, des groupes amide d'acide carboxylique, des groupes ester d'acide sulfonique, des groupes thiol, des atomes d'halogène ou une combinaison de ces groupes ou atomes, des atomes d'hydrogène étant particulièrement préférés en tant qu'au moins cinq des substituants R₁ à R₇ et des atomes non-hydrogène, de préférence des atomes d'halogène, des groupes alkyle, des groupes alcoxy, des groupes cyano et/ou des groupes nitro, en tant que zéro à deux des substituants R₁ à R₇,
X : est un groupe organique, qui est formé par une réaction de polymérisation à partir d'un groupe constitué par une double liaison organique, une triple liaison organique, un oxirane ou une aziridine, ou est un groupe organique, qui est formé par une réaction polymère-analogue,
n : est un nombre entier supérieur ou égal à 2.

2. Polymères de tétracyanoanthraquinone-diméthane selon la revendication 1, **caractérisés en ce que** X représente un groupe organique d'une des formules générales II à XIV 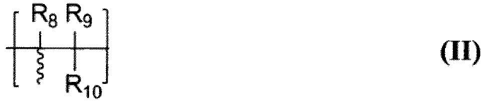 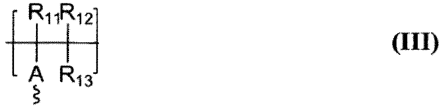 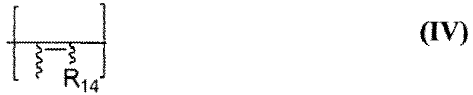 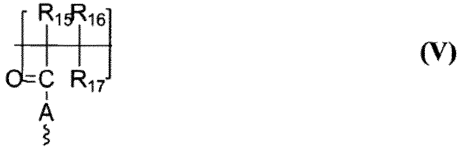 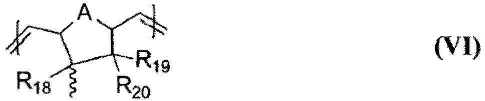 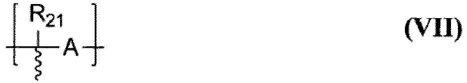 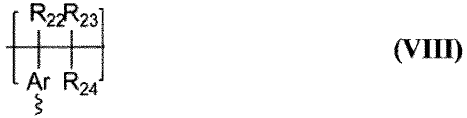 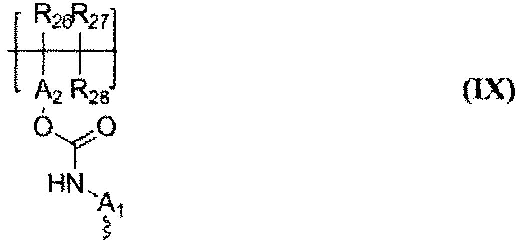 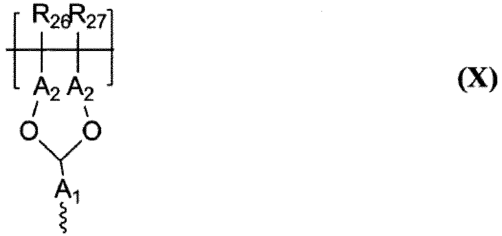 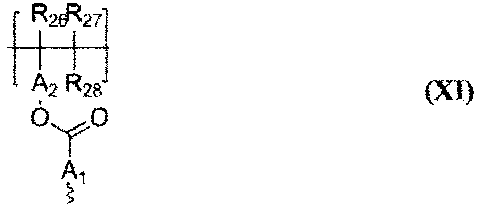 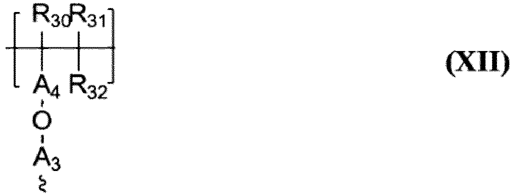 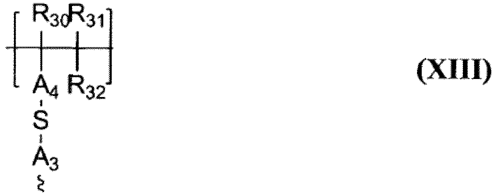 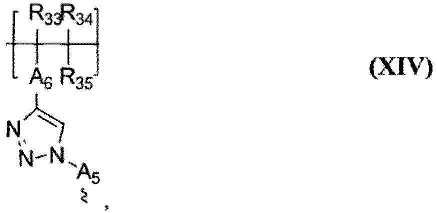 dans lesquelles
R₈ à R₂₄ : peuvent représenter indépendamment les uns des autres de préférence des atomes d'hydrogène, des groupes alkyle, des groupes alcényle, des groupes alcynyle, des groupes alcoxy, des groupes alkylthio, des groupes haloalkyle, des groupes haloalcoxy, des groupes cycloalkyle, des groupes cycloalcoxy, des groupes aryle, des groupes hétéroaryle, des groupes aryloxy, des groupes aralkyle, des groupes acide carboxylique, des groupes acide sulfonique, des groupes amino, des groupes monoalkylamino, des groupes dialkylamino, des groupes nitro, des groupes cyano, des groupes hydroxyle, des groupes alkylcarbonyle, des groupes alcénylcarbonyle, des groupes alcynylcarbonyle, des groupes ester d'acide carboxylique, des groupes amide d'acide carboxylique, des groupes ester d'acide sulfonique, des groupes thiol, des atomes d'halogène ou une combinaison de ces groupes ou atomes,
des atomes d'hydrogène étant particulièrement préférés en tant qu'au moins deux des substituants R₈ à R₁₀ et des atomes non-hydrogène, de préférence des atomes d'halogène, des groupes alkyle, des groupes alcoxy, des groupes cyano et/ou des groupes nitro, en tant que zéro à deux des substituants R₈ à R₁₀, et/ou
des atomes d'hydrogène en tant qu'au moins deux des substituants R₁₁ à R₁₃ et des atomes non-hydrogène, de préférence des atomes d'halogène, des groupes alkyle, des groupes alcoxy, des groupes cyano et/ou des groupes nitro, en tant que zéro à un des substituants R₁₁ à R₁₃,
et/ou
un atome d'hydrogène en tant que R₁₄, et/ou
des atomes d'hydrogène en tant qu'au moins deux des substituants R₁₅ à R₁₇ et des atomes non-hydrogène, de préférence des atomes d'halogène, des groupes alkyle, des groupes alcoxy, des groupes cyano et/ou des groupes nitro, en tant que zéro à un des substituants R₁₅ à R₁₇,
et/ou
des atomes d'hydrogène en tant qu'au moins deux des substituants R₁₈ à R₂₀ et des atomes non-hydrogène, de préférence des atomes d'halogène, des groupes alkyle, des groupes alcoxy, des groupes cyano et/ou des groupes nitro, en tant que zéro à un des substituants R₁₈ à R₂₀,
et/ou
un atome d'hydrogène en tant que R₂₁, et/ou
des atomes d'hydrogène en tant qu'au moins deux des substituants R₂₂ à R₂₄ et des atomes non-hydrogène, de préférence des atomes d'halogène, des groupes alkyle, des groupes alcoxy, des groupes cyano et/ou des groupes nitro, en tant que zéro à un des substituants R₂₂ à R₂₄,
R₂₆ à R₂₈ : peuvent représenter indépendamment les uns des autres de préférence des atomes d'hydrogène, des groupes alkyle, des groupes alcényle, des groupes alcynyle, des groupes alcoxy, des groupes alkylthio, des groupes haloalkyle, des groupes haloalcoxy, des groupes cycloalkyle, des groupes cycloalcoxy, des groupes aryle, des groupes hétéroaryle, des groupes aryloxy, des groupes aralkyle, des groupes acide carboxylique, des groupes acide sulfonique, des groupes amino, des groupes monoalkylamino, des groupes dialkylamino, des groupes nitro, des groupes cyano, des groupes hydroxyle, des groupes alkylcarbonyle, des groupes alcénylcarbonyle, des groupes alcynylcarbonyle, des groupes ester d'acide carboxylique, des groupes amide d'acide carboxylique, des groupes ester d'acide sulfonique, des groupes thiol, des atomes d'halogène ou une combinaison de ces groupes ou atomes, des atomes d'hydrogène étant particulièrement préférés en tant qu'au moins deux des substituants R₂₆ à R₂₈ et des atomes non-hydrogène, de préférence des atomes d'halogène, des groupes alkyle, des groupes alcoxy, des groupes cyano et/ou des groupes nitro, en tant que zéro à un des substituants R₂₆ à R₂₈,
R₃₀ à R₃₂ : peuvent représenter indépendamment les uns des autres de préférence des atomes d'hydrogène, des groupes alkyle, des groupes alcényle, des groupes alcynyle, des groupes alcoxy, des groupes alkylthio, des groupes haloalkyle, des groupes haloalcoxy, des groupes cycloalkyle, des groupes cycloalcoxy, des groupes aryle, des groupes hétéroaryle, des groupes aryloxy, des groupes aralkyle, des groupes acide carboxylique, des groupes acide sulfonique, des groupes amino, des groupes monoalkylamino, des groupes dialkylamino, des groupes nitro, des groupes cyano, des groupes alkylcarbonyle, des groupes alcénylcarbonyle, des groupes alcynylcarbonyle, des groupes ester d'acide carboxylique, des groupes amide d'acide carboxylique, des groupes ester d'acide sulfonique, des atomes d'halogène ou une combinaison de ces groupes ou atomes, des atomes d'hydrogène étant particulièrement préférés en tant qu'au moins deux des substituants R₃₀ à R₃₂ et des atomes non-hydrogène, de préférence des atomes d'halogène, des groupes alkyle, des groupes alcoxy, des groupes cyano et/ou des groupes nitro, en tant que zéro à un des substituants R₃₀ à R₃₂,
R₃₃ à R₃₅ : peuvent représenter indépendamment les uns des autres de préférence des atomes d'hydrogène, des groupes alkyle, des groupes alcényle, des groupes alcoxy, des groupes alkylthio, des groupes haloalkyle, des groupes haloalcoxy, des groupes cycloalkyle, des groupes cycloalcoxy, des groupes aryle, des groupes hétéroaryle, des groupes aryloxy, des groupes aralkyle, des groupes acide carboxylique, des groupes acide sulfonique, des groupes amino, des groupes monoalkylamino, des groupes dialkylamino, des groupes nitro, des groupes cyano, des groupes hydroxyle, des groupes alkylcarbonyle, des groupes alcénylcarbonyle, des groupes alcynylcarbonyle, des groupes ester d'acide carboxylique, des groupes amide d'acide carboxylique, des groupes ester d'acide sulfonique, des groupes thiol, des atomes d'halogène ou une combinaison de ces groupes ou atomes, des atomes d'hydrogène étant particulièrement préférés en tant qu'au moins deux des substituants R₃₃ à R₃₅ et des atomes non-hydrogène, de préférence des atomes d'halogène, des groupes alkyle, des groupes alcoxy, des groupes cyano et/ou des groupes nitro, en tant que zéro à un des substituants R₃₃ à R₃₅,
A : est un atome d'oxygène, un atome de soufre ou un groupe -N(R₂₉)-, R₂₉ étant de préférence un atome d'hydrogène, un groupe alkyle, un groupe alcényle, un groupe alcynyle, un groupe alcoxy, un groupe alkylthio, un groupe haloalkyle, un groupe haloalcoxy, un groupe cycloalkyle, un groupe cycloalcoxy, un groupe aryle, un groupe hétéroaryle, un groupe aryloxy, un groupe aralkyle, un groupe acide carboxylique, un groupe acide sulfonique, un groupe nitro, un groupe alkylcarbonyle, un groupe alcénylcarbonyle, un groupe alcynylcarbonyle, un groupe ester d'acide carboxylique, un groupe amide d'acide carboxylique, un groupe ester d'acide sulfonique, un atome d'oxygène étant particulièrement préféré en tant que A,
A₁ et A₂ : sont indépendamment l'un de l'autre de préférence une liaison covalente, un groupe alkyle, un groupe alcényle, un groupe alcynyle, un groupe alcoxy, un groupe alkylthio, un groupe haloalkyle, un groupe haloalcoxy, un groupe cycloalkyle, un groupe cycloalcoxy, un groupe aryle, un groupe hétéroaryle, un groupe aryloxy, un groupe aralkyle, un groupe monoalkylamino, un groupe dialkylamino, un groupe alkylcarbonyle, un groupe alcénylcarbonyle, un groupe alcynylcarbonyle, un groupe ester d'acide carboxylique, un groupe amide d'acide carboxylique, un groupe ester d'acide sulfonique, une liaison covalente ou un groupe alkyle étant particulièrement préféré en tant qu'A₁ et A₂,
A₃ et A₄ : sont indépendamment l'un de l'autre de préférence une liaison covalente, un groupe alkyle, un groupe alcényle, un groupe alcynyle, un groupe alcoxy, un groupe alkylthio, un groupe cycloalkyle, un groupe cycloalcoxy, un groupe aryle, un groupe hétéroaryle, un groupe aryloxy, un groupe aralkyle, un groupe dialkylamino, un groupe alkylcarbonyle, un groupe alcénylcarbonyle, un groupe alcynylcarbonyle, un groupe ester d'acide carboxylique, un groupe amide d'acide carboxylique, un groupe ester d'acide sulfonique, une liaison covalente ou un groupe alkyle étant particulièrement préféré en tant qu'A₁ et A₂,
A₅ et A₆ : sont indépendamment l'un de l'autre de préférence une liaison covalente, un groupe alkyle, un groupe alcényle, un groupe alcoxy, un groupe alkylthio, un groupe haloalkyle, un groupe haloalcoxy, un groupe cycloalkyle, un groupe cycloalcoxy, un groupe aryle, un groupe hétéroaryle, un groupe aryloxy, un groupe aralkyle, un groupe monoalkylamino, un groupe dialkylamino, un groupe alkylcarbonyle, un groupe alcénylcarbonyle, un groupe alcynylcarbonyle, un groupe ester d'acide carboxylique, un groupe amide d'acide carboxylique, un groupe ester d'acide sulfonique, une liaison covalente, un groupe aryle ou un groupe alkyle étant particulièrement préféré en tant qu'A₅ et A₆,
Ar : correspond à un groupe cycloalkyle, un groupe cycloalcoxy, un groupe aryle, un groupe hétéroaryle, un groupe aryloxy, un groupe aralkyle, substitués indépendamment les uns des autres.

3. Utilisation des polymères de tétracyanoanthraquinone-diméthane selon l'une ou les deux des revendications 1 et 2 en tant que matériau d'électrode actif pour emmagasineurs de charges électriques, notamment batteries secondaires.

4. Utilisation des polymères de tétracyanoanthraquinone-diméthane selon la revendication 3, dans laquelle le matériau d'électrode actif est configuré sous la forme d'un revêtement de surface complet ou partiel d'éléments d'électrodes pour emmagasineurs de charges électriques, notamment batteries secondaires.

5. Utilisation des polymères de tétracyanoanthraquinone-diméthane selon l'une ou les deux des revendications 1 et 2 en tant que pâte d'électrode pour emmagasineurs de charges électriques, notamment batteries secondaires.
